# EUROPEAN PATENT SPECIFICATION

(11) **EP 4 247 031 B1**
(45) Date of publication and mention of the grant of the patent: **21.05.2025**
(21) Application number: 21900005.6
(22) Date of filing: 30.11.2021
(51) Int. Cl.: H04W 12/06, H04W 48/16, G06F 3/0346, H04W 8/00, H04W 84/12, H04W 48/14, H04W 48/20

(54) **ACCESS METHOD AND SYSTEM AND ELECTRONIC DEVICE**
ZUGRIFFSVERFAHREN UND -SYSTEM SOWIE ELEKTRONISCHE VORRICHTUNG
PROCÉDÉ ET SYSTÈME D'ACCÈS ET DISPOSITIF ÉLECTRONIQUE

(30) Priority: 04.12.2020 CN 202011399025
(43) Date of publication of application: 20.09.2023
(73) Proprietor: Huawei Technologies Co., Ltd., Shenzhen, Guangdong 518129 (CN)
(72) Inventor: YANG, Ming, Shenzhen, Guangdong 518129 (CN); YU, Zhongyi, Shenzhen, Guangdong 518129 (CN); YANG, Jianhua, Shenzhen, Guangdong 518129 (CN)
(74) Representative: Isarpatent
(86) International application number: PCT/CN2021/134522
(87) International publication number: WO 2022/116974

(56) References cited:
- WO-A1-2019/227450
- WO-A1-2019/227450
- CN-A- 105 704 841
- CN-A- 106 973 381
- CN-A- 111 371 864
- US-A1- 2014 094 167
- US-A1- 2014 206 287

## Description

This application claims priority to Chinese Patent Application No. 202011399025.5, filed with the China National Intellectual Property Administration on December 4, 2020 and entitled "ACCESS METHOD AND SYSTEM, AND ELECTRONIC DEVICE'.

### TECHNICAL FIELD

This disclosure relates to the field of terminal devices, and in particular, to an access method and system.

### BACKGROUND

With rapid development of communication technologies, a wireless fidelity (wireless fidelity, Wi-Fi) network is used in increasingly extensive scenarios. In addition to a higher speed, a larger capacity, a lower delay, and more refined traffic management, the Wi-Fi network may further provide a user with higher spectral efficiency, wider coverage, a more energy-saving scheduling mechanism, and higher reliability and security.

Currently, a technology for connecting a terminal device to a Wi-Fi network is not perfect. For example, a password of a Wi-Fi network needs to be entered to connect a terminal to the Wi-Fi network. However, user experience of this manner is poor in some scenarios because this manner features relatively low security but complex operations.
US 11 032 862 B2 relates to methods for improving communication connection systems, specifically focusing on devices within a household.
WO2019227450A1 relates to a method for implementing application functions in electronic devices, particularly focusing on improving the efficiency of data sharing between devices through wireless connections.

### SUMMARY

The object of the present application is to provide an access method and system. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "... aspect according to an example", "the disclosure describes", or "the disclosure" describe technical teaching which relates to the understanding of the invention or its embodiments, which, however, is not claimed as such. In this method, a first electronic device may establish a connection to a second electronic device under a specific condition, and send connection information to the second electronic device based on the established connection, so that the second electronic device may be connected to an access point device based on the connection information obtained from the first electronic device. This provides a convenient access mode, and enables the second electronic device to connect to a Wi-Fi network without entering a password by a user. Therefore, a device can be connected to a network in a more secure and convenient manner.

### BRIEF DESCRIPTION OF DRAWINGS

FIG. 1 is an example schematic diagram depicting a structure of an electronic device;
FIG. 2 is an example schematic diagram depicting a software structure of an electronic device;
FIG. 3 is a schematic diagram depicting a principle of an access method according to an embodiment of this application;
FIG. 4 is an example flowchart for establishing a connection;
FIG. 5(1) and FIG. 5(2) are an example schematic diagram of user interfaces;
FIG. 6 is an example schematic diagram of an application scenario;
FIG. 7 is an example schematic diagram of module interaction;
FIG. 8 is an example flowchart for establishing a connection;
FIG. 9 is an example flowchart for establishing a connection;
FIG. 10 is an example flowchart for establishing a connection;
FIG. 11 is an example flowchart for establishing a connection;
FIG. 12a, FIG. 12b(1), FIG. 12b(2), FIG. 12b(3), and FIG. 12b(4) are example schematic diagrams of user interfaces;
FIG. 13 is an example schematic diagram of a user interface;
FIG. 14 is an example schematic diagram of an application scenario; and
FIG. 15 is an example schematic diagram of a user interface.
In the following description, features which in the above summary of the invention have been marked as "not claimed" are also hereinafter, when they are described and explained with reference to the drawings, to be understood as "not claimed" or "not part of the invention".

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship between associated objects and represents that three relationships may exist. For example, A and/or B may represent the following three cases: Only A exists, both A and B exist, and only B exists.

In the specification and claims in embodiments of this application, the terms such as "first" and "second" are intended to distinguish between different objects but do not indicate a particular order of the objects. For example, a first target object, and a second target object are used to distinguish between different target objects, but are not used to describe a particular order of the target objects.

In addition, in embodiments of this application, the term "example", "for example", or the like is used to provide an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a related concept in a specific manner.

In the description of embodiment of this application, unless otherwise stated, "a plurality of" means two or more than two. For example, a plurality of processing units are two or more processing units, and a plurality of systems are two or more systems.

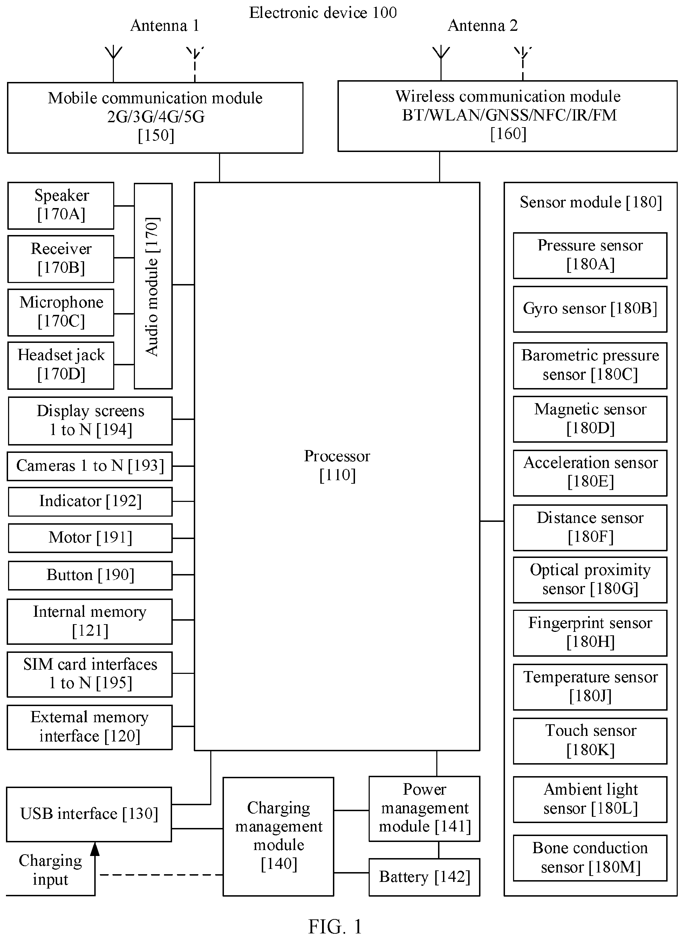

FIG. 1 is a schematic diagram depicting a structure of an electronic device 100. It should be understood that the electronic device 100 shown in FIG. 1 is merely an example of an electronic device. The electronic device 100 may have more or fewer components than those shown in the figure, may combine two or more components, or may have different component configurations. Various components shown in FIG. 1 may be implemented in hardware including one or more signal processors and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural processing unit (neural processing unit, NPU). Different processing units may be independent components, or may be integrated into one or more processors.

The controller may be a nerve center and a command center of the electronic device 100. The controller may generate an operation control signal based on an instruction operation code and a time sequence signal, to control obtaining and execution of instructions.

A memory may be further disposed in the processor 110, and is configured to store instructions and data. In some embodiments, the memory in the processor 110 is a cache. The memory may store instructions that have been just used or cyclically used by the processor 110, or data that has been just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between the modules shown in this embodiment of the present disclosure is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives input of the battery 142 and/or the charging management module 140, to supply power to the processor 110, the internal memory 121, an external memory, the display screen 194, the camera 193, the wireless communication module 160, and the like. The power management module 141 may be further configured to monitor a parameter such as a battery capacity, a battery cycle count, or a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G, or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display screen 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communications processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), the BT, the GNSS, the WLAN, the NFC, the FM, the IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display screen 194, the application processor, and the like. The GPU is a microprocessor for image processing, and is connected to the display screen 194 and the application processor. The GPU is configured to perform mathematical and geometric computation, and render an image. The processor 110 may include one or more GPUs that execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light-emitting diode (quantum dot light-emitting diodes, QLED), or the like. In some embodiments, the electronic device 100 may include one or N display screens 194, where N is a positive integer greater than 1.

The electronic device 100 may implement a photographing function through the ISP, the camera 193, the video codec, the GPU, the display screen 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, so as to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform or the like on frequency energy.

The video codec is configured to compress or decompress a digital video. The electronic device 100 may support one or more video codecs. In this way, the electronic device 100 may play or record videos in a plurality of coding formats, such as moving picture experts group (moving picture experts group, MPEG)-1, MPEG-2, MPEG-3, and MPEG-4.

The external memory interface 120 may be used to connect to an external storage card such as a micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (such as a sound playing function or an image playing function), and the like. The data storage area may store data (such as audio data or a phone book) created during use of the electronic device 100, and the like. In addition, the internal memory 121 may include a high-speed random access memory, and may further include a nonvolatile memory such as at least one magnetic disk storage device, a flash memory, or a universal flash storage (universal flash storage, UFS) device.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

Optionally, the sensor module 180 may further include a tap detection module (not shown in the figure), configured to detect whether a tap event occurs in the electronic device. Optionally, the tap detection module may be a physical component, or may be a non-physical component. This is not limited in this application. For example, the tap detection module may obtain data of the acceleration sensor 180E and the gyro sensor 180B, and perform corresponding analysis on the obtained data, so as to detect whether a tap event occurs.

A software system of the electronic device 100 may use a layered architecture, an event-driven architecture, a microkernel architecture, a microservice architecture, or a cloud architecture. In this embodiment of the present invention, an Android system of the layered architecture is used as an example to illustrate a software structure of the electronic device 100.

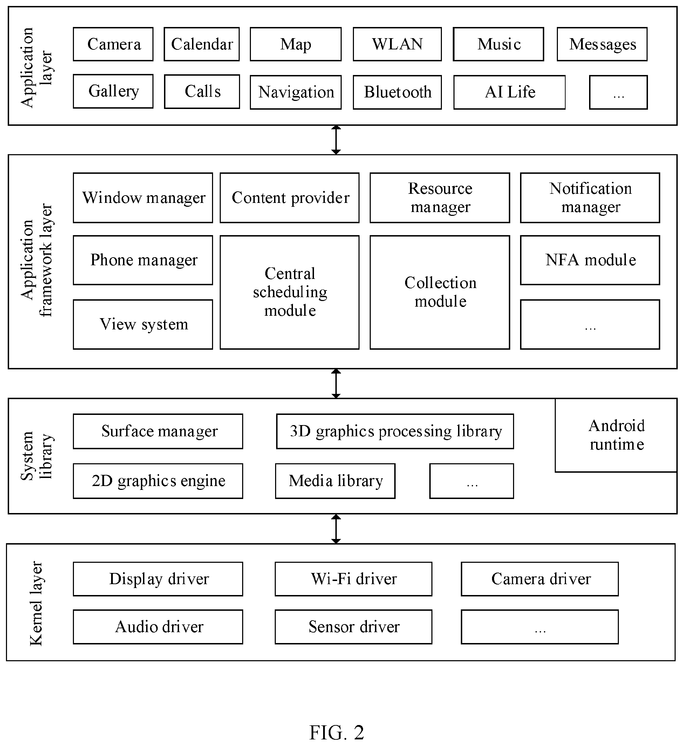

FIG. 2 is a block diagram depicting the software structure of the electronic device 100 according to an embodiment of this application.

In the layered architecture, software is divided into several layers, and each layer has a clear role and task. The layers communicate with each other through a software interface. In some embodiments, the Android system is divided into the following four layers from top down: an application layer, an application framework layer, an Android runtime (Android runtime) and a system library, and a kernel layer.

The application layer may include a series of application packages.

As shown in FIG. 2, the application packages may include applications such as Camera, Gallery, Calendar, Calls, Map, Navigation, WLAN, Bluetooth, Music, Videos, Messages, and AI Life.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, a central scheduling module, a collection module, an NFA (nearfind arbitration, nearfind arbitration) module, and the like.

The window manager is configured to manage a window program. The window manager may obtain a size of the display screen, determine whether there is a status bar, perform screen locking, take a screenshot, and the like.

The content provider is configured to store and obtain data, and enable the data to be accessed by an application. The data may include a video, an image, audio, calls that are made and answered, a browsing history and a bookmark, a phone book, and the like.

The view system includes visual controls such as a control for displaying text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources, such as a localized character string, an icon, an image, a layout file, and a video file, for an application.

The notification manager enables an application to display notification information in a status bar, and may be configured to convey a notification message. The displayed notification information may automatically disappear after a short pause without user interaction. For example, the notification manager is configured to notify download completion, give a message notification, and the like. The notification manager may alternatively display a notification in the status bar at the top of the system in a form of a graph or scrollable text, for example, a notification of an application running in the background or a notification that appears on the screen in a form of a dialog box. For example, text information is displayed in the status bar, a prompt tone is given, the electronic device vibrates, or the indicator light blinks.

The central scheduling module is configured to invoke the collection module and the NFA module to perform corresponding processing.

The collection module is configured to collect specified data based on an indication of the central scheduling module and determine, based on the specified data, whether to trigger the NFA module to perform a connection establishment procedure.

The NFA module is configured to establish, manage, and maintain a connection between the electronic device and another electronic device. Corresponding processing procedures of the central scheduling module, the collection module, and the NFA module are described in detail in the following embodiments.

The Android runtime includes a kernel library and a virtual machine. The Android runtime is responsible for scheduling and management of the Android system.

The kernel library includes two parts: a function that needs to be invoked in Java and a kernel library of Android.

The application layer and the application framework layer run on the virtual machine. The virtual machine executes Java files of the application layer and the application framework layer as binary files. The virtual machine is used to implement functions such as object lifecycle management, stack management, thread management, security and exception management, and garbage collection.

The system library may include a plurality of functional modules, such as a surface manager (surface manager), a media library (Media Libraries), a 3D graphics processing library (such as OpenGL ES), and a 2D graphics engine (such as SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, such as MPEG-4, H.264, MP3, AAC, AMR, JPG, and PNG.

The 3D graphics processing library is configured to implement 3D graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, a sensor driver, and a Wi-Fi driver.

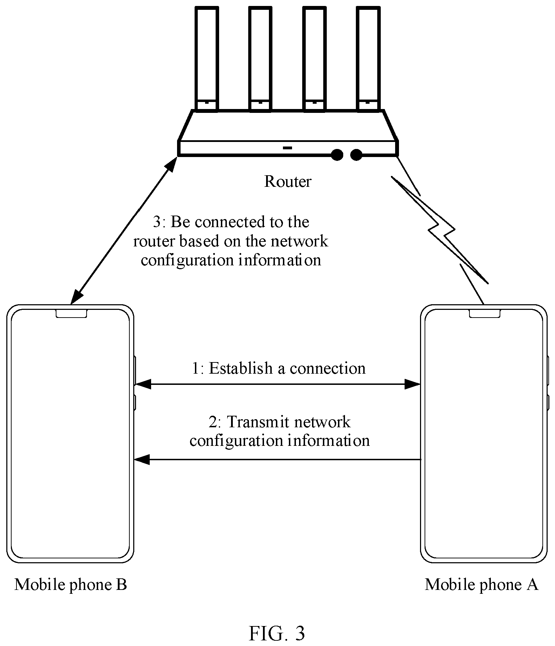

FIG. 3 is a schematic diagram depicting a principle of an access method according to an embodiment of this application. Refer to FIG. 3. For example, in this scenario, a mobile phone A exchanges data with a router through a Wi-Fi connection, and a mobile phone B is not connected to the router. Alternatively, it may be understood that the mobile phone B is not connected to an access point (Access Point, AP) corresponding to the router. It should be noted that "not connected to the router or an access point" in this application is optionally that an electronic device has never been connected to the router. In other words, the electronic device does not store network configuration information of a Wi-Fi network of the router. Optionally, the electronic device has been connected to the router. However, due to another reason such as resetting, the network configuration information of the Wi-Fi network of the router is not stored currently, or the network configuration information of the Wi-Fi network of the router is incorrect. Consequently, the mobile phone cannot be connected to the router. A process in which the mobile phone B is connected to the router may include three parts. Part 1: Establish a connection. For example, establish a connection (which may also be referred to as a communication connection) between the mobile phone A and the mobile phone B. Part 2: Transmit network configuration information. For example, after the connection between the mobile phone A and the mobile phone B is established, the mobile phone A may send the network configuration information to the mobile phone B through the connection to the mobile phone B. In this embodiment of this application, the network configuration information includes information required for connecting to the Wi-Fi network. For example, the network configuration information may include an SSID (Service Set Identifier, service set identifier) and a password of the Wi-Fi network, and optionally may further include but is not limited to information such as a BSSID (Basic Service Set Identifier, basic service set identifier), an operating channel, and an encryption mode. For example, as shown in FIG. 3, the mobile phone A transmits the network configuration information of the Wi-Fi network of the router to the mobile phone B, and the mobile phone B receives and stores the network configuration information. Part 3: The mobile phone B is connected to the router based on the received network configuration information. For example, the mobile phone B may establish a Wi-Fi connection to the router based on the received network configuration information (such as the SSID and the password), and exchange data with the router through the established Wi-Fi connection.

For example, in a STA (Station, station)-AP mode between the mobile phone A and the router and a STA-AP mode between the mobile phone B and the router, the mobile phone A and the mobile phone B may be referred to as stations. The station refers to a terminal device (an electronic device) that has a Wi-Fi communication function and is connected to a wireless network. The station may support a plurality of wireless local area network (wireless local area network, WLAN) standards of an 802.11 family, for example, 802.11be, 802.11ax, 802.11ac, 802.11n, 802.11g, 802.11b, and 802.11a.

Optionally, the access point is a terminal device (such as a mobile phone) with a Wi-Fi chip or a network device (such as a router) with a Wi-Fi chip. For example, the access point may be a device that supports the 802.11be standard. Alternatively, the access point may be a device that supports a plurality of WLAN standards of the 802.11 family, for example, 802.11be, 802.11ax, 802.11ac, 802.11n, 802.11g, 802.11b, and 802.11a. For example, the router may include one or more access points. For example, a dual-band integrated router includes two access points. BSSIDs of the two access points are different, and passwords and SSIDs of the two access points may be the same or may be different. Optionally, the access point may alternatively be another electronic device or network device, such as customer premises equipment (Customer Premises Equipment, CPE). This is not limited in this application. Generally, one access point device may be connected to a plurality of station devices. It should be noted that the electronic device in this embodiment of this application is usually a terminal device that supports a standard of the 802.11 series. In an evolution process from 802.11a to 802.11g, 802.11n, and 802.11ac and then to 802.11ax, available frequency bands include 2.4 gigahertz (GHz) and 5 GHz. As more frequency bands become available, a maximum channel bandwidth supported by 802.11 is expanded from 20 megahertz (MHz) to 40 MHz and then to 160 MHz. In 2017, the federal communications commission (federal communications commission, FCC) opened up a new unlicensed frequency band of 6 GHz (5925 MHz to 7125 MHz). Drafters of the 802.11ax standard expanded an operating range of 802.11ax devices from 2.4 GHz and 5 GHz to 2.4 GHz, 5 GHz and 6 GHz in the 802.11ax project authorization request (project authorization request, PAR).

Optionally, in this embodiment of this application, the electronic device and the network device may alternatively be terminal products that support another standard, such as a proprietary protocol or a NAN (neighbor awareness networking, neighbor awareness networking) protocol. This is not limited in this application.

It should be noted that the network configuration information in this embodiment of this application may alternatively be referred to as fingerprint library information, connection information, Wi-Fi network information, or the like of the Wi-Fi network. This is not limited in this application. Optionally, the network configuration information is obtained in a process in which the mobile phone A is connected to the Wi-Fi network. A specific manner is described with reference to a procedure that uses a WLAN protocol and that is described later.

It should be further noted that this application uses merely an example in which the electronic device is a mobile phone for description. Actually, an electronic device used to send network configuration information, namely, a device that has been connected to a router, may alternatively be a device that has a Wi-Fi function and a display interface, such as a tablet or a wearable device. Optionally, an electronic device used to receive the network configuration information, namely, a device to be connected to the router, may alternatively be a device having a Wi-Fi function, such as a tablet, a notebook computer, a sound box, a wearable device, or a household appliance. This is not limited in this application.

It should be further noted that the Wi-Fi network in this embodiment of this application is an encrypted network. For an unencrypted network, the mobile phone may be automatically connected to the unencrypted Wi-Fi network based on a received user operation. Details are not described below.

The following describes in detail the three parts in FIG. 3 with reference to specific embodiments.

### Part 1: Establish a connection.

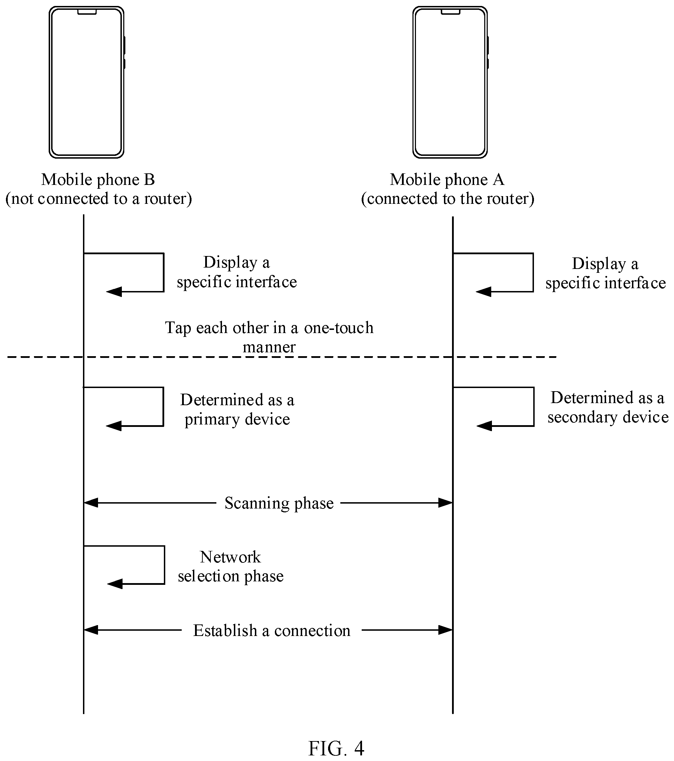

FIG. 4 is an example flowchart for establishing a connection. Refer to FIG. 4. For example, in this embodiment of this application, if the mobile phone A and the mobile phone B tap each other in a one-tap manner after display interfaces of the mobile phone A and the mobile phone B each display a specific interface, a connection establishment procedure is started between the mobile phone A and the mobile phone B, to establish a Wi-Fi connection.

Optionally, a specific interface corresponding to the mobile phone A may be the same as or different from a specific interface corresponding to the mobile phone B. For example, the specific interface corresponding to the mobile phone A may be an application interface of an AI Life application, and the specific interface corresponding to the mobile phone B may be a home screen. It should be noted that, in another embodiment, the specific interface corresponding to the mobile phone A may alternatively be one or more of interfaces such as a home screen and a setting interface. For example, a plurality of specific interfaces may be set for the mobile phone A. In this case, when the mobile phone A displays the home screen, the setting interface, or the like, it may be considered that the mobile phone A displays the specific interface. Optionally, the specific interface corresponding to the mobile phone B may be one or more of interfaces such as the application interface of the AI Life application, a screen-on unlock screen, or a screen-on lock screen. Optionally, the specific interface of the mobile phone A and the specific interface of the mobile phone B are the same. For example, the mobile phone A displays a WLAN setting interface, and the mobile phone B also displays the WLAN setting interface. In this case, the WLAN setting interface is the specific interface corresponding to each of the mobile phone A and the mobile phone B. Certainly, the specific interface may alternatively be an interface of any other application. This is not limited in this application.

For example, the following embodiment of this application is described by using an example in which the specific interface corresponding to the mobile phone A is the application interface of AI Life and the specific interface corresponding to the mobile phone B is the home screen. In this embodiment, a limitation of a specific interface is based on a user habit. For the mobile phone A that has been configured with a network (that is, has stored the network configuration information) and the mobile phone B that has not been configured with a network (that is, has not stored the network configuration information), a subsequent network configuration procedure is triggered only if the mobile phone A and the mobile phone B each display a specific interface. This ensures higher security, and prevents a user from triggering an operation by mistake. In addition, this reduces power consumption, and improves user experience. It should be noted that "configuring a network" in this embodiment of this application optionally is that the mobile phone A transmits network configuration information to the mobile phone B, so that the mobile phone B can be connected to a corresponding network based on the network configuration information.

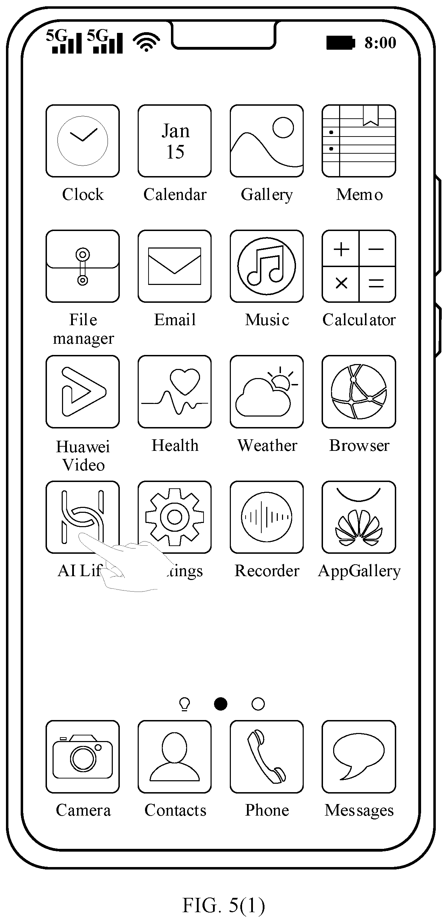

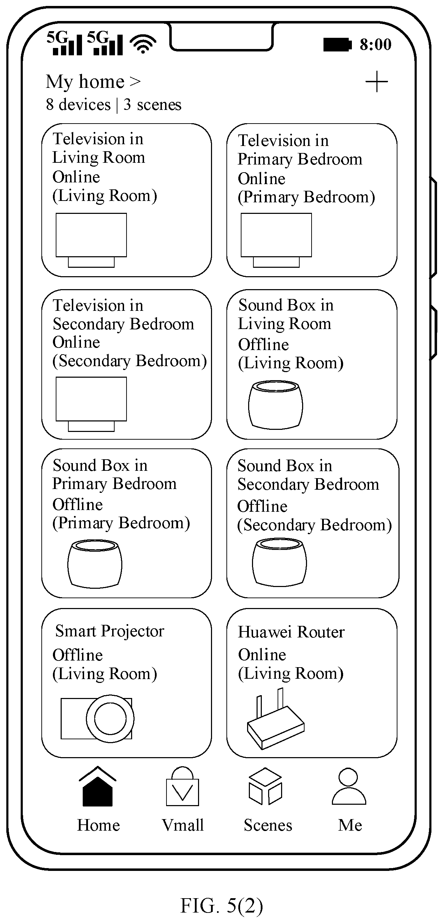

FIG. 5(1) and FIG. 5(2) are an example schematic diagram of user interfaces. Refer to FIG. 5(1). For example, the home screen of the mobile phone A includes one or more controls, which includes but is not limited to an application icon, a network identifier, a power identifier, or the like. This embodiment of this application is described by using an example in which the mobile phone A is an electronic device that has been connected to a router, such as the mobile phone A in FIG. 1, and an example in which the mobile phone B is an electronic device that is to be connected to the router, such as the mobile phone B in FIG. 1.

Still refer to FIG. 5(1). For example, a user taps an application icon of an AI Life application, and the mobile phone A displays an application interface of the AI Life application in response to the user operation. Refer to FIG. 5(2). For example, the application interface of the AI Life application includes one or more controls, which includes but is not limited to an option setting icon (such as a home option or a Vmall option), a device option (such as a television in a living room or a television in a primary bedroom), or the like. Optionally, the device option may indicate whether a corresponding device is online and display a name, a type, an icon, and the like of the device. Optionally, the user may tap the device option to enter a management interface of the device, to manage the device. For example, the mobile phone A is currently connected to a router, and a Huawei router option in the device option indicates that the router is in the living room and the router is online. Optionally, the application interface of the AI Life application may further include a function option. For example, the function option may include a one-tap option, and the one-tap option may be used to prompt the user to configure a network for another device in the one-tap manner. Optionally, the one-tap function further corresponds to another function. For example, a function such as wireless projection may be implemented in the one-tap manner. In an example, the function option or the one-tap option may further include options such as a one-tap connection option and a one-tap projection option. For example, the user taps the one-tap option, and the mobile phone may display a one-tap option box in response to the user operation. The option box includes the one-tap connection option and the one-tap projection option. The user may tap the one-tap connection option to indicate that if a tap event occurs on the mobile phone, the tap event may trigger a procedure for establishing a connection to another electronic device. Optionally, the function option may further include a proximity discovery connection function and another function, to indicate that the mobile phone may configure a network for another device through proximity discovery or in another manner.

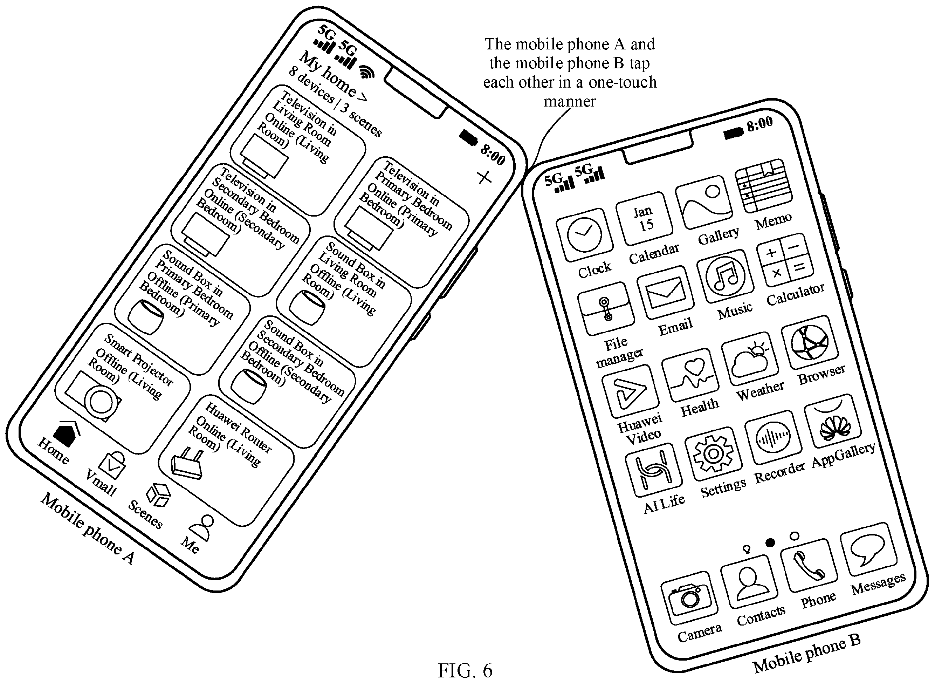

FIG. 6 is an example schematic diagram of an application scenario, and is used as an example to describe a possible application scenario. A user A is a house owner, and a mobile phone A of the user A is connected to a router. A user B is a guest. The user B wants to connect a mobile phone B to the router in the house, so as to connect to a network. The user A may hold the mobile phone A and enable the mobile phone A to enter an application interface of an AI Life application. In addition, the user A may ask the user B to have the mobile phone B display a home screen. Refer to FIG. 6. For example, the mobile phone A displays the application interface of the AI Life application, and the mobile phone B displays the home screen. The user A taps the mobile phone A against the mobile phone B of the user B (to be specific, the mobile phone A and the mobile phone B tap each other in the one-tap manner). It should be noted that the tap manner in FIG. 6 is merely an example. In another embodiment, it may be that any location on the mobile phone A taps any location on the mobile phone B. For example, an upper-right corner of the mobile phone A taps a back of the mobile phone B. This is not limited in this application.

For example, refer to FIG. 4. After the mobile phone A and the mobile phone B tap each other in the one-tap manner, a connection establishment procedure is initiated between the mobile phone A and the mobile phone B. The procedure includes a phase for determining a primary device or a secondary device, a scanning phase, a network selection phase, and a connection establishment phase in FIG. 4.

The following describes in detail each phase in FIG. 4 with reference to specific embodiments.

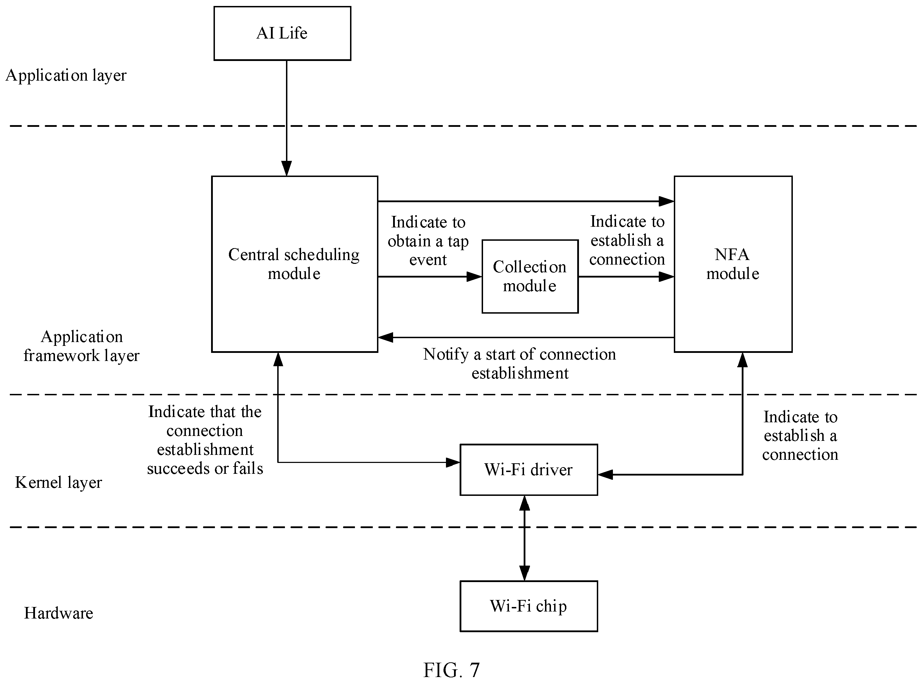

FIG. 7 is an example schematic diagram of module interaction. Refer to FIG. 7. For example, a mobile phone A is used as an example. The mobile phone A displays an application interface of an AI Life application in response to an operation performed by a user. A central scheduling module may identify that an AI Life interface is currently displayed. For example, after the AI Life application is started and displayed in the foreground, the AI Life application may output a scheduling message to the central scheduling module, to indicate the AI Life application to be displayed in the foreground.

Still refer to FIG. 7. For example, after determining that the application interface of the AI Life application is displayed on a home screen of the mobile phone A, the central scheduling module indicates a collection module to obtain a tap event and perform corresponding processing. Specifically, in a one-tap connection scenario, the collection module may obtain a detection result from a tap detection module in response to an indication from the central scheduling module. For example, the collection module may obtain, through a program interface, the detection result input by the tap detection module and determine, based on the detection result, whether a tap event occurs. After determining that the tap event occurs, the collection module may further obtain data collected by an acceleration sensor, to determine whether an effective tap event, namely, a one-tap event, occurs. For example, after the mobile phone is powered on, the tap detection module and the acceleration sensor optionally obtain corresponding data in real time or periodically. Data obtained by the tap detection module indicates whether a tap occurs on the mobile phone, and data obtained by the acceleration sensor indicates an acceleration of the mobile phone in space. Optionally, the collection module may be provided with the program interface. The collection module may listen to the tap detection module and the acceleration sensor through the program interface, to obtain an event from the tap detection module and data input by the acceleration sensor. It should be noted that, in this embodiment of this application, the collection module starts to invoke the program interface only after the collection module receives an indication from the central scheduling module, so as to listen to the tap detection module and the acceleration sensor. Therefore, power consumption of the mobile phone is reduced.

For example, the collection module listens to the tap detection module and the acceleration sensor based on the indication from the central scheduling module, so as to obtain an event input by the tap detection module and data input by the acceleration sensor. In addition, the collection module determines, based on the obtained data and event, whether a trigger condition of the one-tap function is met, which may also be understood as whether a one-tap event actually occurs on the mobile phone A. This prevents a misoperation.

Optionally, the trigger condition of the one-tap function includes but is not limited to the following condition: The collection module receives a tap event input by the tap detection module. Further, after determining that the tap event occurs, the collection module determines, based on data input by the acceleration sensor, that the tap event is effective. As described above, that the tap event is effective means that a one-tap event, instead of an accidental tap or a light tap, occurs on the mobile phone A.

For example, after a tap event occurs on the mobile phone A, the tap detection module inputs the tap event to the collection module. When the mobile phone A is accidentally or lightly tapped, for example, when the mobile phone A is lightly tapped against another object (such as a desktop), the tap detection module also inputs a tap event to the collection module. In order to exclude an ineffective tap event, after receiving a tap event input by the tap detection module, the collection module further obtains data collected by the acceleration sensor. Optionally, the collection module may obtain, through the program interface, data collected by the acceleration sensor within a specified time period. Optionally, the specified time period is 5s (or another value such as 3s or 6s, which is not limited in this application) before a moment at which the collection module receives the tap event. For example, the collection module may determine, based on the data obtained from the acceleration sensor, whether the tap event is effective. For example, the collection module may perform filtering processing on the data (including accelerations along an x-axis, a y-axis, and a z-axis in space) input by the acceleration sensor. For example, the collection module performs filtering processing by using a moving average filtering method or a weighted recursive average filtering method. If a processed acceleration is greater than a specified threshold (which may be set based on an actual situation, and is not limited in this application), the collection module determines that the tap event is an effective tap event.

Optionally, the trigger condition of the one-tap function may alternatively be that two or more effective tap events (for example, three effective tap events) occur within the specified time period. For example, after determining that there is one effective tap event (for a determining manner, refer to the foregoing description, and details are not described herein), the collection module determines that there is a second effective tap event within the specified time period (for example, within 5s). Then, the collection module determines that a one-tap connection function is triggered. To be specific, after it is determined that a one-tap operation is performed on the mobile phone A, a subsequent connection establishment procedure is initiated.

Still refer to FIG. 7. For example, after determining that a one-tap event occurs on the mobile phone A, the collection module indicates an NFA module to initiate the connection establishment procedure. For example, in response to the indication received from the collection module, the NFA module indicates a Wi-Fi driver to initiate the connection establishment procedure, and indicates that the mobile phone A is a primary device for connection establishment or a secondary device for connection establishment. It should be noted that in this embodiment of this application, the primary device is an initiator of connection establishment, and the secondary device is a device that performs corresponding processing in response to signaling sent by the initiator of connection establishment. Optionally, the primary device may be the mobile phone A, namely, a device that has been connected to a router. Alternatively, the primary device may be the mobile phone B, namely, a device that is to be connected to the router. In this embodiment of this application, an example in which the primary device (namely, a connection initiator) is the mobile phone B, namely, the device to be connected to the router, and the secondary device is the mobile phone A, namely, the device that has been connected to the router is used for description. It should be further noted that in this embodiment of this application, the router to which a connection is to be established and the router to which a connection has been established optionally refer to the router (or an access point) to which the mobile phone A has been connected, for example, the router in FIG. 3.

For example, the NFA module may determine, based on a specified condition, that the mobile phone A is the primary device or the secondary device. The specified condition involves a connection status of the mobile phone and a display interface status of the mobile phone.

For example, in this embodiment of this application, the specified condition may be specifically: if the mobile phone has been connected to a Wi-Fi network and a display interface of the mobile phone displays the application interface of the AI Life application, the mobile phone is determined as the secondary device; or if the mobile phone is not connected to a Wi-Fi network and the display interface of the mobile phone is the home screen, the mobile phone is determined as the primary device. For example, in the application scenario shown in FIG. 3, the mobile phone A is connected to the Wi-Fi network of the router, and displays the application interface of the AI Life application. Optionally, after detecting that the mobile phone A displays the AI Life interface, the central scheduling module invokes the NFA module while invoking the collection module. In other words, the central scheduling module indicates, to the NFA module, that the mobile phone A displays the AI Life interface. For example, the NFA may obtain, from the Wi-Fi driver, a Wi-Fi connection status of the mobile phone A, that is, the mobile phone A has been connected to the Wi-Fi network. Then, the NFA module may determine that the mobile phone A is the secondary device. Correspondingly, the mobile phone B is not connected to the router (and is not connected to another Wi-Fi network), and the mobile phone B displays the home screen. In this case, an NFA module in the mobile phone B may determine that the mobile phone B is the primary device (a specific determining manner is similar to that used by the NFA module in the mobile phone A, and details are not described herein). It should be noted that this embodiment of this application is described merely by using an example in which the NFA module is an execution body for determining the primary device or the secondary device. In another embodiment, the execution body for determining the primary device or the secondary device may alternatively be the central scheduling module. For example, after determining that a one-tap event occurs, the collection module may output to the central scheduling module a determining result that a one-tap event occurs currently. As described above, the central scheduling module may use an interface between the central scheduling module and the Wi-Fi driver to obtain the Wi-Fi connection status of the mobile phone A, for example, obtain that the mobile phone A is currently connected to the Wi-Fi network. Based on the specified condition, that is, the mobile phone A is connected to the Wi-Fi network and displays the AI Life interface, the central scheduling module may determine that the mobile phone A is the secondary device, and indicate the NFA module to start the connection establishment procedure. In addition, the central scheduling module indicates that the mobile phone A is the secondary device.

In a possible implementation, the specified condition may alternatively be: if the mobile phone has been connected to a Wi-Fi network and a display interface of the mobile phone displays the application interface of the AI Life application, the mobile phone is determined as the secondary device; or if the mobile phone has been connected to a Wi-Fi network and the display interface of the mobile phone is the home screen, the mobile phone is determined as the primary device. For example, in the application scenario shown in FIG. 3, the mobile phone A is connected to the Wi-Fi network of the router, and displays the application interface of the AI Life application. In this case, the mobile phone A is the secondary device. The mobile phone B is not connected to the router in FIG. 3, but is connected to a Wi-Fi network of another router. In addition, the mobile phone B displays the home screen. In this case, the mobile phone B is the primary device.

In another possible implementation, as described above, specific interfaces of the mobile phone A and the mobile phone B may alternatively be the same. For example, both the specific interfaces of the mobile phone A and the mobile phone B are the application interface of AI Life. In this scenario, the specified condition may be: if the mobile phone has been connected to a Wi-Fi network, the mobile phone is determined as the secondary device; or if the mobile phone is not connected to the Wi-Fi network, the mobile phone is determined as the primary device.

In still another possible implementation, in the scenario in which the specific interfaces of the mobile phone A and the mobile phone B are the same, the specified condition may alternatively be: if the mobile phone has been connected to a Wi-Fi network, and a communication quality parameter for the Wi-Fi network is greater than or equal to a threshold (in other words, communication quality is relatively good), the mobile phone is determined as the secondary device; or if the mobile phone has been connected to a Wi-Fi network, and a communication quality parameter for the Wi-Fi network is less than a threshold, the mobile phone is determined as the primary device. For example, as shown in FIG. 3, the mobile phone A is connected to the Wi-Fi network of the router, and the mobile phone B is connected to a Wi-Fi network of another router. The mobile phone B wants to switch to the Wi-Fi network of the router in FIG. 3, or wants to connect to the Wi-Fi network of the router in FIG. 3 through a dual-band Wi-Fi connection function while maintaining a current Wi-Fi connection. For example, a communication quality parameter for the Wi-Fi network of the mobile phone A is greater than or equal to the threshold, and a communication quality parameter for the Wi-Fi network of the mobile phone B is less than the threshold. In this case, the mobile phone A may be determined as the secondary device, and the mobile phone B may be determined as the primary device.

Optionally, the communication quality parameter includes but is not limited to at least one of the following: an SNR (SIGNAL-TO-NOISE RATIO, signal-to-noise ratio), RSRP (Reference Signal Received Power, reference signal received power), RSRQ (Reference Signal Received Quality, reference signal received quality), an RSSI (Received Signal Strength Indicator, received signal strength indicator), and the like.

It should be noted that, in this embodiment of this application, the mobile phone A and the mobile phone B each are determined as the primary device or the secondary device independently. For example, after the mobile phone A determines that the mobile phone A is the secondary device, and the mobile phone B determines that the mobile phone B is the primary device, the mobile phone A and the mobile phone B do not know roles of each other. The mobile phone A serves as the secondary device and waits for the mobile phone B that serves as the primary device to initiate the connection establishment procedure. The mobile phone B serves as the primary device, namely, a connection establishment initiator, and initiates the connection establishment procedure, for example, sends a scanning packet.

In this embodiment of this application, with reference to FIG. 6, the NFA module detects that the mobile phone A is connected to the router, and the display interface of the mobile phone displays the application interface of the AI Life application. Therefore, the NFA module determines that the mobile phone A is the secondary device.

It should be noted that each module in the mobile phone B also performs corresponding processing that is performed by each module in the mobile phone A. For example, when detecting that the mobile phone B displays the home screen, a central scheduling module in the mobile phone B indicates a collection module in the mobile phone B to perform corresponding processing. For example, after determining that the one-tap function is triggered, a collection module indicates the NFA module to start the connection establishment procedure. Further, the NFA module may detect, based on the foregoing specified condition, that the mobile phone B is not connected to the router and the display interface of the mobile phone B is the home screen, and determine that the mobile phone B is the primary device, namely, the connection establishment initiator. For content that is not described for the mobile phone B, refer to related content for the mobile phone A. Details are not described herein.

Still refer to FIG. 7. Optionally, after starting the connection establishment procedure, the NFA module may notify the central scheduling module that the connection establishment procedure has been started currently. Optionally, it is assumed that the mobile phone A exits the AI Life application in response to a received user operation before connection establishment is completed. The central scheduling module detects an invocation of the AI Life application but does not receive a connection establishment success message fed back by the Wi-Fi driver. In this case, the central scheduling module may indicate the NFA module to stop the connection establishment procedure, and the NFA module may further indicate the Wi-Fi driver to stop the connection establishment procedure in response to the indication from the central scheduling module. Correspondingly, the Wi-Fi driver indicates a Wi-Fi chip to stop the connection establishment procedure, and feeds back a connection establishment failure message to the central scheduling module.

Refer to FIG. 4. For example, in this embodiment of this application, an example in which the mobile phone B is determined as the primary device, namely, the connection initiator, and the mobile phone A is determined as the secondary device is used for description.

For example, in this embodiment of this application, a function of the secondary device (such as the mobile phone A) is similar to that of an AP in a basic service set BSS (Basic Service Set), and a function of the primary device (such as the mobile phone B) is similar to that of a STA in the BSS. For description of the AP and the STA, refer to the foregoing description. Details are not described herein.

It should be noted that, in this embodiment of this application, a connection between the mobile phone A and the router may be a 5 GHz connection, a 2.4 GHz connection, or a dual-band connection that supports 2.4 GHz and 5 GHz frequency bands. A connection between the mobile phone A and the mobile phone B may be a 2.4 GHz connection or a 5 GHz connection. Specific implementation depends on a capability of a Wi-Fi chip in each of the mobile phone. For example, it is assumed the mobile phone A and the mobile phone B each have a Wi-Fi chip that supports the 2.4 GHz and 5 GHz frequency bands, and the Wi-Fi connection between the mobile phone A and the router is the 5 GHz connection. Optionally, the connection between the mobile phone A and the mobile phone B may be the 2.4 GHz connection, to reduce impact of data exchange between the mobile phone A and the mobile phone B on data exchange between the mobile phone A and the router.

Specifically, in the scanning phase, the mobile phone B serves as the primary device, namely, the connection initiator. In the scanning phase, the mobile phone B periodically performs scanning on a specified channel (such as a channel 6). For example, the mobile phone B sends a scanning packet every 20 ms. Correspondingly, as described above, the mobile phone A serves as the secondary device, and is equivalent to an access point that operates on the channel 6. In other words, in the scanning phase, the mobile phone B may discover, through scanning, the mobile phone A that operates on the channel 6. For example, the mobile phone B receives a response packet sent by the mobile phone A. It should be noted that this embodiment of this application is described merely by using an example in which the mobile phone A and the mobile phone B establish a connection on the channel 6, that is, in the 2.4 GHz frequency band. As described above, the connection between the mobile phone A and the mobile phone B may alternatively be a 5 GHz connection. For example, the mobile phone A and the mobile phone B may perform the scanning phase on a specified channel, such as a channel 135, in the 5 GHz frequency band. This is not limited in this application.

Still refer to FIG. 4. For example, in the network selection phase, the mobile phone B may determine, based on one or more communication quality parameters (for concepts, refer to the foregoing description) corresponding to one or more access points that are discovered through scanning, an access point to which a connection can be established.

For example, in the network selection phase, the mobile phone B may use the following manner to determine the access point to which a connection can be established: The mobile phone B obtains, based on the one or more communication quality parameters corresponding to the one or more access points that are discovered through scanning, a distance between the mobile phone B and each of the one or more access points. For example, after the mobile phone A and the mobile phone B tap each other in the one-tap manner (and before the network selection phase starts), a distance between the mobile phone A and the mobile phone B is generally less than 20 cm. Therefore, the mobile phone A is optionally a closest access point in the plurality of access points discovered by the mobile phone B through scanning. The mobile phone B selects the mobile phone A as the access point to be connected to, and establishes a connection to the mobile phone A. It should be noted that, a time period from when the mobile phone A and the mobile phone B tap each other in the one-tap manner to when the mobile phone B performs network selection may be within 1s. Therefore, after the mobile phone A and the mobile phone B tap each other in the one-tap manner, the distance between the mobile phone A and the mobile phone B is generally less than 20 cm.

It should be noted that two or more signaling interactions need to be performed between the mobile phone A and the mobile phone B in the scanning phase. As described above, the mobile phone A and the mobile phone B each are determined as the primary device or the secondary device based on the specified condition after the mobile phone A and the mobile phone B tap each other in the one-tap manner.

In a possible implementation, it is assumed that the mobile phone A does not display the specific interface, such as the AI Life interface, and the mobile phone B displays the specific interface, such as the home screen. After the mobile phone A and the mobile phone B tap each other in the one-tap manner, the mobile phone B starts the connection establishment procedure. In other words, the mobile phone B is determined as the primary device (for specific details, refer to the foregoing description). However, the mobile phone A does not display the specific interface. Therefore, none of the central scheduling module, the collection module, and the NFA module performs corresponding processing. In other words, the mobile phone A does not start the connection establishment procedure. In this scenario, when the mobile phone B performs scanning in the scanning phase, for example, sends a scanning packet on the channel 6, the mobile phone B does not receive a response packet from the mobile phone A in the scanning phase because the mobile phone A does not start the connection establishment procedure. Therefore, after waiting for a specified time period (for example, 20 ms), the mobile phone B determines that connection establishment fails. Optionally, this embodiment is described by using an example in which the mobile phone B, namely, the device that is not connected to the router, is the primary device. Correspondingly, after the mobile phone B determines that the connection fails, the Wi-Fi driver specifically indicates a connection establishment failure to the central scheduling module. Optionally, the mobile phone B may display prompt information about a network configuration failure on a current interface. Optionally, the mobile phone B may further display prompt information about a possible reason for the network configuration failure. For example, the displayed possible reason for the network configuration failure is that the mobile phone A does not display the application interface of the AI Life application, or the like. Based on the prompt information, the user may prompt the user that holds the mobile phone A, so that after the mobile phone A displays the application interface of the AI Life application, the mobile phone A taps the mobile phone B in the one-tap manner to perform a subsequent operation.

In another possible implementation, it is assumed that the mobile phone B does not display the specific interface, and the mobile phone A does not receive a scanning packet from the mobile phone B on the channel 6 within the specified time period (for example, 20 ms). Correspondingly, the mobile phone A determines that the connection fails. Specifically, the Wi-Fi driver indicates a connection establishment failure to the central scheduling module. Optionally, the mobile phone A may display prompt information about a network configuration failure on a current interface. Optionally, the mobile phone A may further display prompt information about a possible reason for the network configuration failure. For example, the displayed possible reason for the network configuration failure is that the mobile phone B does not display the application interface of the AI Life application, or the like. Based on the prompt information, the user may prompt the user that holds the mobile phone B, so that after the mobile phone B displays the application interface of the AI Life application, the mobile phone B taps the mobile phone A in the one-tap manner to perform a subsequent operation.

The foregoing is described merely by using an example in which the connection between the mobile phone A and the mobile phone B fails to be established because the mobile phone A or the mobile phone B does not display a specific interface. In another embodiment, the connection between the mobile phone A and the mobile phone B may alternatively fail to be established due to another reason, such as a network reason or a hardware reason. This is not limited in this application.

For example, in this embodiment of this application, the mobile phone A and the mobile phone B may establish a connection based on any specified communication protocol. Optionally, the communication protocol may be any one of the following: a Huawei proprietary protocol, a P2P (point-to-point, point-to-point) protocol, a WLAN protocol, a NAN protocol, or the like. This is not limited in this application.

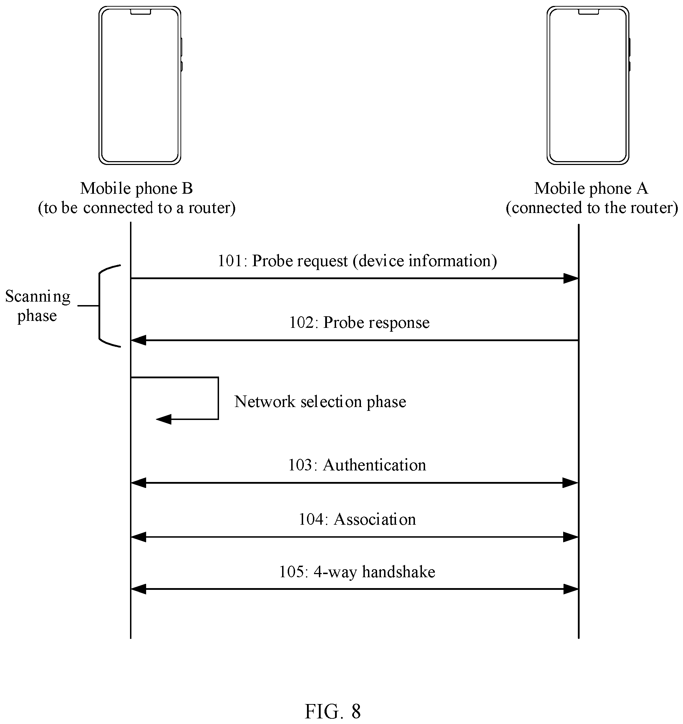

In a possible implementation, FIG. 8 is a flowchart for establishing a connection between the mobile phone A and the mobile phone B based on the WLAN protocol. As shown in FIG. 8, the flowchart specifically includes the following steps.

S101: The mobile phone B sends a probe request (probe request) packet to the mobile phone A.

For example, the probe request packet sent by the mobile phone B to the mobile phone A carries device information of the mobile phone B. The device information includes but is not limited to at least one piece of the following information: a device model, a device name, a MAC address, and the like. Optionally, the device information may be included in a specified field, such as an IE field, in the probe request packet.

S102: The mobile phone A sends a probe response (probe response) packet to the mobile phone B.

S103: The mobile phone A and the mobile phone B perform authentication.

S104: The mobile phone A and the mobile phone B are associated.

S105: The mobile phone A and the mobile phone B perform a 4-way handshake (4-way handshake).

It should be noted that a plurality of signaling interactions are actually performed in S103 to S105 to transmit corresponding data or information. For specific interaction details, refer to an interaction procedure in the 802.11 protocol. Details are not described in this application.

It should be further noted that, as described above, a process in which the mobile phone A is connected to the router also complies with the WLAN protocol. For example, the mobile phone A may send a probe request packet on all channels in the 5 GHz frequency band or the 2.4 GHz frequency band. In other words, the mobile phone A performs network-wide scanning. The mobile phone A may receive a probe response packet sent by the router, where the probe response packet sent by the router carries information, such as an SSID, a BSSID, or an encryption mode, of the router. Optionally, if a network of the router is an encrypted network, and the mobile phone A is connected to the router for the first time, the mobile phone A displays a password input prompt box, to obtain a password of the Wi-Fi network of the router. After the user enters the password, the mobile phone A correspondingly stores information (namely, network configuration information, which may alternatively be referred to as fingerprint information) such as the password of the Wi-Fi network, the SSID, the BSSID, and the encryption mode. In the network selection phase, the mobile phone A selects the Wi-Fi network of the router to be connected to, and performs a subsequent connection procedure.

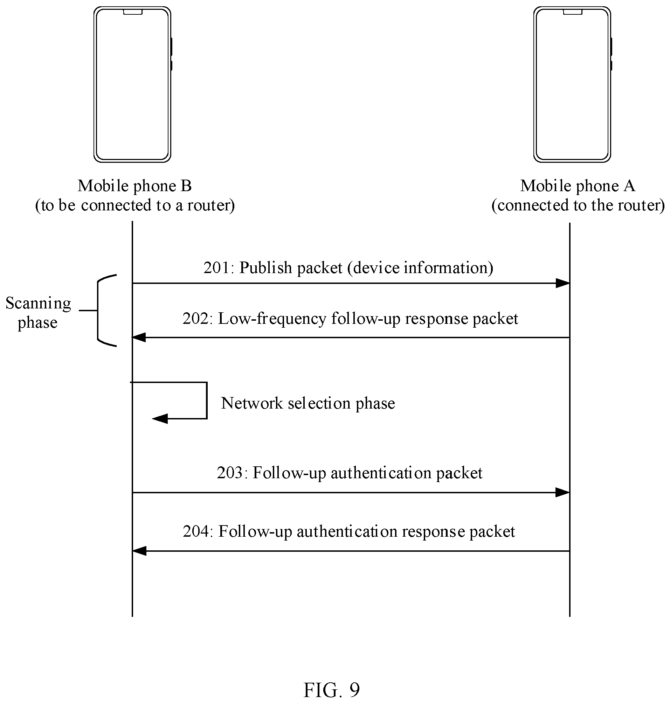

In another possible implementation, FIG. 9 is a flowchart for establishing a connection between the mobile phone A and the mobile phone B based on the NAN protocol. As shown in FIG. 9, the flowchart specifically includes the following steps.

S201: The mobile phone B sends a publish (publish) packet to the mobile phone A.

For example, the publish packet sent by the mobile phone B to the mobile phone A carries device information of the mobile phone B. The device information includes but is not limited to at least one piece of the following information: a device model, a device name, a MAC address, and the like. Optionally, the device information may be included in a specified field, such as an IE (information element, information element) field, in the publish packet.

S202: The mobile phone A sends a low-frequency follow-up (follow-up) response packet to the mobile phone B.

S203: The mobile phone B sends a follow-up authentication packet to the mobile phone B.

S204: The mobile phone A sends a follow-up authentication response packet to the mobile phone B.

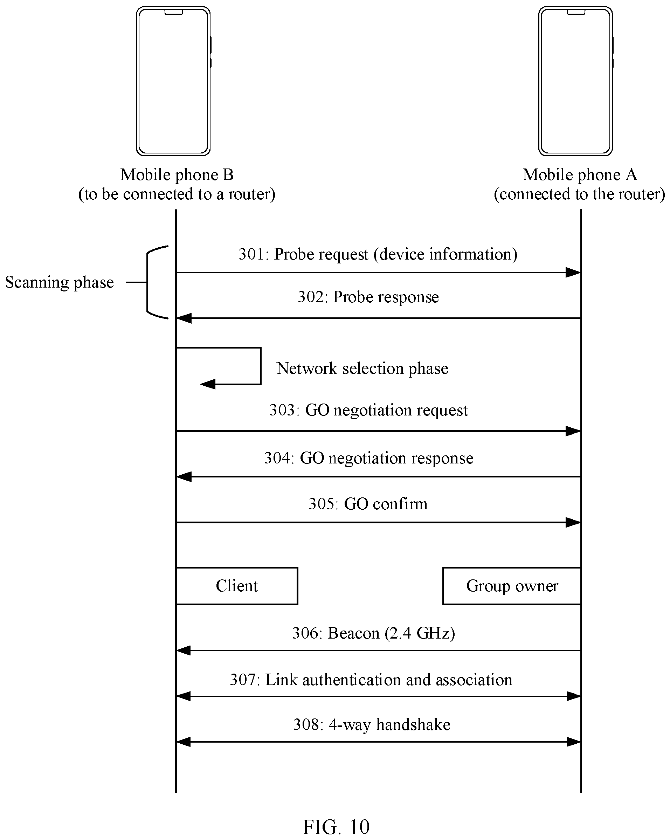

In still another possible implementation, FIG. 10 is a flowchart for establishing a connection between the mobile phone A and the mobile phone B based on the P2P protocol. As shown in FIG. 10, the flowchart specifically includes the following steps.

S301: The mobile phone B sends a probe request packet to the mobile phone A.

For example, the probe request packet sent by the mobile phone B to the mobile phone A carries device information of the mobile phone B. The device information includes but is not limited to at least one piece of the following information: a device model, a device name, a MAC address, and the like. Optionally, the device information may be included in a specified field, such as an IE field, in the probe request packet.

S302: The mobile phone B sends a probe response packet to the mobile phone A.

S303: The mobile phone B sends a GO negotiation request (Group Owner negotiation request, group owner negotiation request) packet to the mobile phone A.

S304: The mobile phone A sends a GO negotiation response (GO negotiation response) packet to the mobile phone B.

S305: The mobile phone B sends a GO confirm (GO confirm) packet to the mobile phone A.

It should be noted that three frame exchanges in S303 to S305 are used to exchange information, so as to determine a GO and a client. Information exchanged in the three frame exchanges includes but is not limited to information such as a MAC address and a group ID of the GO. In descriptions of embodiments of this application, an example in which a large screen is the GO and the mobile phone is the client is used for description.

S306: The mobile phone B sends a beacon (beacon) packet to the mobile phone A.

S307: The mobile phone A and the mobile phone B perform link authentication and are associated.

S308: The mobile phone A and the mobile phone B perform a 4-way handshake.

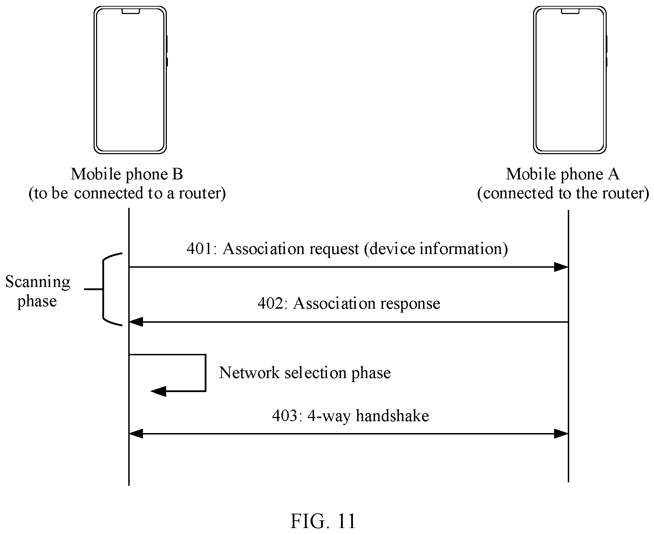

In yet another possible implementation, FIG. 11 is a flowchart for establishing a connection between the mobile phone A and the mobile phone B based on a proprietary protocol (such as the Huawei proprietary protocol). As shown in FIG. 11, the flowchart specifically includes the following steps.

S401: The mobile phone B sends an association request packet to the mobile phone A.

For example, the association request packet sent by the mobile phone B to the mobile phone A carries device information of the mobile phone B. The device information includes but is not limited to at least one piece of the following information: a device model, a device name, a MAC address, and the like. Optionally, the device information may be included in a specified field, such as an IE field, in the association request packet.

S402: The mobile phone A sends an association response packet to the mobile phone B.

S403: The mobile phone A and the mobile phone B perform a 4-way handshake.

In a possible implementation, the mobile phone A and the mobile phone B may trigger the connection establishment procedure in another manner in addition to the one-tap manner. In an example, the mobile phone A and the mobile phone B may trigger the connection establishment procedure by using a proximity discovery function. For example, after the mobile phone A and the mobile phone B each display a specific interface, the mobile phone A may be determined as the primary device or the secondary device based on a status of a router to which the mobile phone A is connected and a specific interface of the mobile phone A, and the mobile phone B may be determined as the primary device or the secondary device based on a status of a router to which the mobile phone B is connected and a specific interface of the mobile phone B. For example, the mobile phone B is still the primary device, and the mobile phone A is the secondary device. After the mobile phone B is determined as the primary device, the mobile phone B initiates a scanning phase. For example, the mobile phone B performs scanning on the channel 6, that is, sends a scanning message on the channel 6. If a distance between the mobile phone A and the mobile phone B is less than 30 cm, the mobile phone B may discover the mobile phone A on the channel 6 through scanning, for example, receive a scanning response message returned by the mobile phone A. For example, if the mobile phone B detects that a communication quality parameter of communication between the mobile phone B and the mobile phone A is greater than or equal to the threshold, the mobile phone B initiates a connection to the mobile phone A. For example, if the mobile phone B determines, based on the obtained communication quality parameter of communication between the mobile phone B and the mobile phone A, that the distance between the mobile phone B and the mobile phone A is less than or equal to the threshold (such as 20 cm), the mobile phone B may establish a connection to the mobile phone A. For details that are not described, refer to the foregoing descriptions. Details are not described herein. It should be noted that, if the mobile phone A serves as the connection initiator (that is, the primary device), the mobile phone A may optionally obtain a communication quality parameter of communication between or a distance between the mobile phone A and the mobile phone B based on a scanning message sent by the mobile phone B. Optionally, the mobile phone A may send a scanning request message to the mobile phone B, and obtain the communication quality parameter of communication between or the distance between the mobile phone A and the mobile phone B based on a scanning response message returned by the mobile phone B.

In another example, the mobile phone A and the mobile phone B may trigger the connection establishment procedure by using a UWB (Ultra-wideband, ultra-wideband) ranging function. For example, both the mobile phone A and the mobile phone B support the UWB ranging function. The mobile phone A is used as an example. After the mobile phone A and the mobile phone B each display a specific interface, the mobile phone A may invoke data collected by a UWB ranging module and determine, based on the data collected by the UWB ranging module, that a distance between the mobile phone A and the mobile phone B is less than 30 cm. Then, the mobile phone A performs a subsequent connection establishment procedure, for example, determines the primary device or the secondary device. Operations performed by the mobile phone B are similar to those performed by the mobile phone A. Details are not described herein.

It should be noted that, that the mobile phone A and the mobile phone B establish a connection in this embodiment of this application may be understood as that the mobile phone A and the mobile phone B establish a communication connection. In other words, the mobile phone A and the mobile phone B may communicate with each other. Optionally, after the mobile phone A receives a response message from the mobile phone B, or the mobile phone B receives a request message from the mobile phone A, it may be considered that a connection has been established between the mobile phone A and the mobile phone B. Optionally, after the mobile phone A and the mobile phone B perform the 4-way handshake, it may be considered that a connection has been established between the mobile phone A and the mobile phone B. This is not limited in this application.

### Part 2: Transmit network configuration information.

For example, as shown in FIG. 3, after the connection is established between the mobile phone A and the mobile phone B, the mobile phone A may send the network configuration information to the mobile phone B.

For example, as described above, a role of each of the mobile phone A and the mobile phone B needs to be determined before the scanning phase starts. The role is the primary device or the secondary device. The mobile phone A and the mobile phone B have different roles. Therefore, types of packets received and sent by the mobile phone A and the mobile phone B are also different, and occasions at which the mobile phone A and the mobile phone B determine that connection establishment is completed are also different. For example, refer to FIG. 9. After receiving the follow-up authentication packet sent by the mobile phone B, the mobile phone A may determine that a connection to the mobile phone B is established. After receiving the follow-up authentication response packet sent by the mobile phone A, the mobile phone B may determine that a connection to the mobile phone A is established. Optionally, it is assumed that the mobile phone A is the primary device, and the mobile phone B is the secondary device. The mobile phone A is the connection establishment initiator. In this case, after receiving a follow-up authentication response packet sent by the mobile phone B, the mobile phone A determines that the connection is established. Correspondingly, after receiving a follow-up authentication packet sent by the mobile phone A, the mobile phone B determines that the connection is established. The foregoing manner in which the mobile phone A and the mobile phone B each confirm that the connection is established may also be applied to a connection establishment procedure that uses another protocol. Details are not described herein.

For example, refer to FIG. 7. In this embodiment of this application, the mobile phone A is the secondary device. After determining, based on a received packet (such as a follow-up authentication packet), that the connection is successfully established, the Wi-Fi driver in the mobile phone A indicates, to the central scheduling module, that the connection is successfully established.

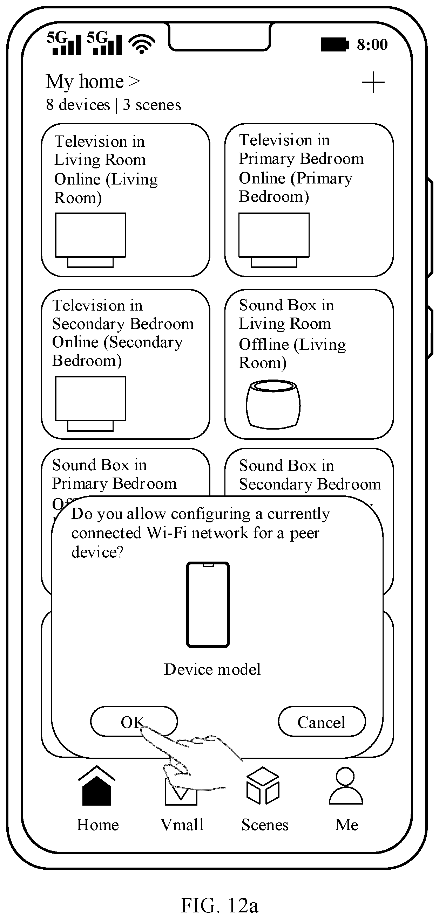

For example, in response to a received indication of successful connection establishment, the central scheduling module displays a prompt box on a current display interface (for example, the application interface of AI Life is currently displayed) of the mobile phone A, as shown in FIG. 12a. Refer to FIG. 12a. For example, a prompt box is displayed on the application interface of AI Life of the mobile phone A. The prompt box includes prompt information, and the prompt information includes but is not limited to prompt information "Do you allow configuring a currently connected Wi-Fi network for a peer device?". The prompt box further includes a device model and a device icon of the mobile phone B. As described above, in a process of establishing a connection between the mobile phone A and the mobile phone B, the mobile phone B may send information such as the device model of the mobile phone B to the mobile phone A. Optionally, the mobile phone A may store device icons corresponding to a plurality of device models. Optionally, the device icon may alternatively be transmitted by the mobile phone B to the mobile phone A. This is not limited in this application. Still refer to FIG. 12a. For example, the prompt box further includes an "OK" option and a "Cancel" option. Optionally, it is assumed that the user taps the "OK" option. In response to the received user operation, the mobile phone A sends, to the mobile phone B through the connection to the mobile phone B, network configuration information of the Wi-Fi network to which the mobile phone A is connected currently. Optionally, it is assumed that the user taps the "Cancel" option. In response to the received user operation, the mobile phone A cancels display of the prompt box, and disconnects from the mobile phone B. It should be noted that, as described above, no limitation is imposed on establishing a connection between the mobile phone A and the mobile phone B. Optionally, the mobile phone A may display the prompt box after receiving, for the first time, a response message sent by the mobile phone B. Optionally, the mobile phone A may display the prompt box after performing a 4-way handshake with the mobile phone B. This is not limited in this application.

In a possible implementation, for example, the Wi-Fi connection between the mobile phone A and the router in FIG. 3 is a 5 GHz connection. The mobile phone A and the mobile phone B each support the 2.4 GHz and 5 GHz frequency bands. After the mobile phone A and the mobile phone B tap each other in the one-tap manner, a 2.4 GHz connection is established between the mobile phone A and the mobile phone B. The mobile phone A sends, to the mobile phone B through the 2.4 GHz connection to the mobile phone B, network configuration information corresponding to a 5 GHz network of the router to which the mobile phone A is connected currently. For example, the network configuration information includes information such as an SSID, a password, an encryption mode, and an operating channel of the 5 GHz network.

In another possible implementation, for example, the Wi-Fi connection between the mobile phone A and the router in FIG. 3 is a dual-band Wi-Fi connection that supports the 2.4 GHz and 5 GHz frequency bands. It should be noted that information such as a password and an SSID in network configuration information of a 2.4 GHz network may be the same as or different from that of a 5 GHz network, but a BSSID in the network configuration information of the 2.4 GHz network is different from that of the 5 GHz network. In an example, it is assumed that the mobile phone B supports only a 5 GHz connection. In a process of establishing a connection between the mobile phone A and the mobile phone B, device information sent by the mobile phone B to the mobile phone A may further include a Wi-Fi capability of the mobile phone B. For example, the Wi-Fi capability indicates that the mobile phone B supports the 5 GHz connection. After the mobile phone A determines that the connection to the mobile phone B is successfully established, and receives an operation of tapping the "OK" option by the user, the mobile phone A may send, to the mobile phone B, only the network configuration information corresponding to the 5 GHz network based on the Wi-Fi capability of the mobile phone B. The Wi-Fi capability indicates that only the 5 GHz connection is supported. In another example, it is assumed that the mobile phone B supports a 5 GHz connection and a 2.4 GHz connection. The mobile phone A may send, to the mobile phone B, the network configuration information corresponding to the 2.4 GHz network and the network configuration information corresponding to the 5 GHz network. Optionally, the mobile phone A may further send, to the mobile phone B, network configuration information corresponding to a network that is in the 2.4 GHz network and the 5 GHz network and that has an optimal communication quality parameter (for a concept, refer to the foregoing description). In other words, in this embodiment of this application, if the mobile phone A is connected to a plurality of Wi-Fi networks, the mobile phone A may send network configuration information of some or all of the plurality of Wi-Fi networks to the mobile phone B. This is not limited in this application.

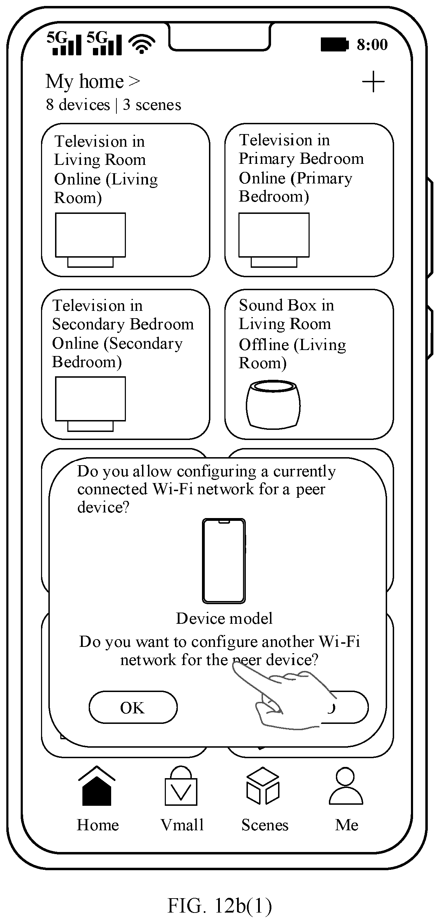

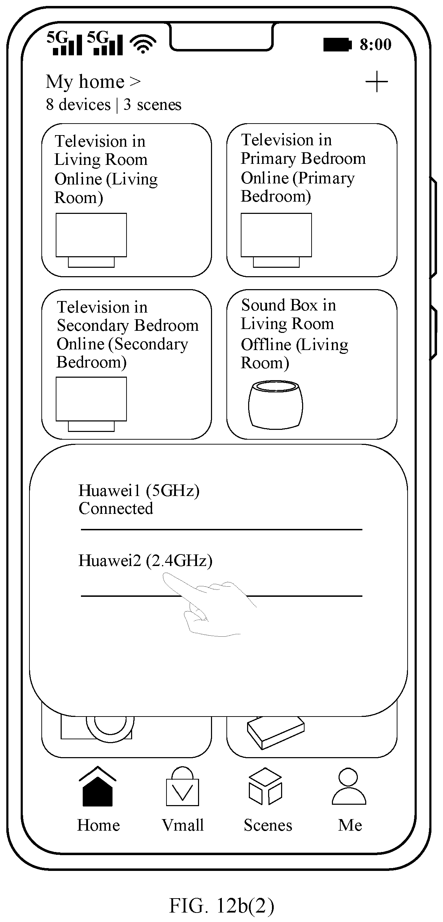

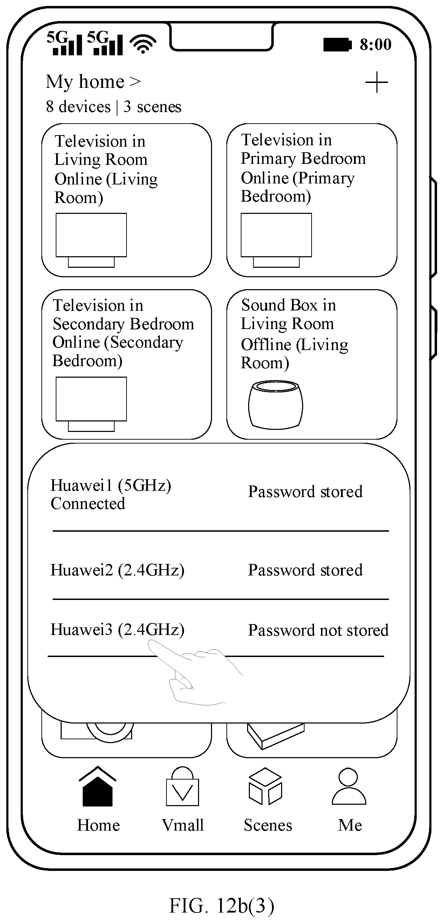

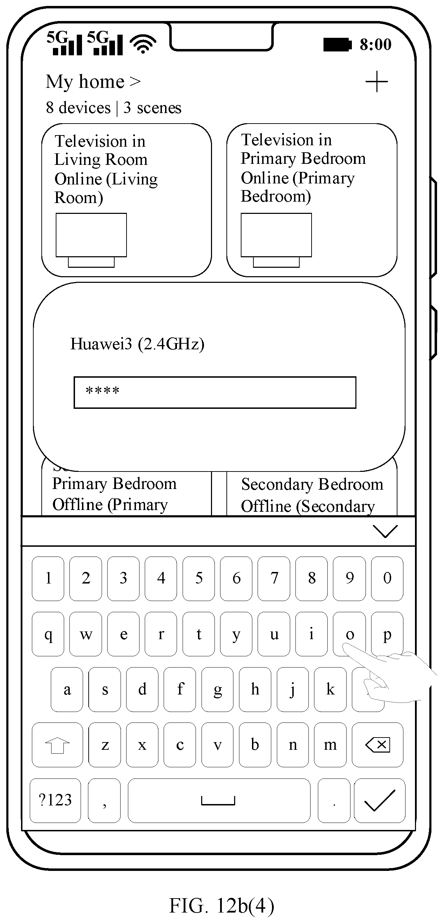

In still another possible implementation, if the mobile phone A further stores network configuration information corresponding to another network, the prompt box displayed on the mobile phone A may further include prompt information "Do you want to configure another Wi-Fi network for the peer device?", as shown in FIG. 12b(1). It should be noted that if the mobile phone A stores only network configuration information corresponding to a currently connected network, the mobile phone A may not display the prompt information "Do you want to configure another Wi-Fi network for the peer device?". Refer to FIG. 12b(1). For example, if the user taps the prompt information "Do you want to configure another Wi-Fi network for the peer device?", the mobile phone A displays another prompt box in response to the user operation. The prompt box includes a plurality of controls. To be specific, the prompt box includes a network name corresponding to a network whose network configuration information is stored in the mobile phone A, and may optionally further include an operating frequency band corresponding to each network, as shown in FIG. 12b(2). Refer to FIG. 12b(2). For example, a plurality of networks displayed on the mobile phone A optionally include the currently connected network (such as a Huawei 1 network) and networks to which the mobile phone A is not connected currently and whose network configuration information is stored in the mobile phone A, for example, a Huawei2 network and a Huawei3 network. Optionally, the user taps an option for the Huawei2 network. In response to the received user operation, the mobile phone A sends, to the mobile phone B through the connection to the mobile phone B, network configuration information corresponding to the Huawei2 network. Optionally, the user taps the Huawei1 network and the Huawei2 network. In response to the received user operation, the mobile phone A transmits, to the mobile phone B, the network configuration information of the Huaweil network and the network configuration information of the Huawei2 network.

Optionally, networks displayed in the another prompt box that is displayed on the mobile phone A in response to the operation of tapping the prompt information "Do you want to configure another Wi-Fi network for the peer device?" by the user include the currently connected network, a network to which the mobile phone A is not connected but whose network configuration information is stored in the mobile phone A, and another network that is discovered by the mobile phone A through scanning and whose network configuration information is not stored in the mobile phone A, as shown in FIG. 12b(3). It should be noted that, the another network that is discovered by the mobile phone A through scanning and whose network configuration information is not stored in the mobile phone A may optionally be discovered by the mobile phone A when the mobile phone A is being connected to the router, or may be discovered by the mobile phone A through scanning that is performed periodically (for example, every 10s), or may be discovered through scanning that is performed in response to the received operation of tapping the prompt information "Do you want to configure another Wi-Fi network for the peer device?" by the user. This is not limited in this application.

Refer to FIG. 12b(3). For example, the prompt box may further include prompt information indicating whether the mobile phone A stores network configuration information of a network. For example, if each of the Huaweil network and the Huawei2 network is a network whose network configuration information is stored, corresponding prompt box includes prompt information "Password stored". The Huawei3 network is a network that is discovered by the mobile phone A through scanning performed most recently and whose network configuration information is not stored. For example, prompt information corresponding to the Huawei3 network includes prompt information "Password not stored". Optionally, if the user taps the Huawei3 network, the mobile phone A displays a password input prompt box on the current interface in response to the received user operation, as shown in FIG. 12b(4). Refer to FIG. 12b(4). For example, the password input box optionally includes a network name of the Huawei3 network and an input box. Optionally, the display interface includes a soft keyboard. The user may tap a digit or letter key on the soft keyboard to enter a password of the Huawei3 network. The mobile phone A sends the password input by the user to the mobile phone B.

In a possible implementation, when sending network configuration information to the mobile phone B, the mobile phone A may encrypt the network configuration information based on an encryption mode agreed on with the mobile phone B, to improve information transmission security. For example, after the connection between the mobile phone A and the mobile phone B is established, the mobile phone A may negotiate the encryption mode with the mobile phone B through the connection between the mobile phone A and the mobile phone B. For example, the encryption mode may be an SHA256 algorithm. This is not limited in this application. The mobile phone A encrypts the network configuration information based on the negotiated encryption mode, and sends encrypted network configuration information to the mobile phone B through the connection between the mobile phone A and the mobile phone B. After receiving the encrypted network configuration information, the mobile phone B may decrypt the encrypted network configuration information based on the encryption mode negotiated in advance, to obtain the network configuration information.

It should be noted that this embodiment of this application is described merely by using an example in which the mobile phone A and the mobile phone B establishes a Wi-Fi connection. In another embodiment, the mobile phone A and the mobile phone B may alternatively establish a connection based on a communication protocol such as a Bluetooth protocol or a ZigBee protocol. For example, after the mobile phone A and the mobile phone B tap each other in the one-tap manner, the mobile phone A may broadcast network configuration information through Bluetooth. The network configuration information is encrypted in a specific encryption mode. The mobile phone B may perform listening after the tap, and after receiving the network configuration information sent by the mobile phone A, decrypt the network configuration information in the specific decryption mode, to obtain the network configuration information. The connection between the mobile phone A and the mobile phone B is maintained through Bluetooth low energy (Bluetooth Low Energy, BLE) broadcast.

### Part 3: The mobile phone B is connected to the router based on the network configuration information.

Still refer to FIG. 3. For example, after obtaining one or more pieces of network configuration information, the mobile phone B may be connected to the network based on the received one or more pieces of network configuration information.

For example, in this embodiment of this application, the mobile phone B may perform network-wide scanning once every 10s. As described above, the network-wide scanning means that the mobile phone B performs scanning on all available channels in the 5 GHz frequency band and the 2.4 GHz frequency band. For example, the mobile phone B sequentially sends a probe request message in a broadcast manner on each channel in the 5 GHz frequency band and the 2.4 GHz frequency band, and may perform scanning on each channel twice, that is, send the probe request message twice. Optionally, the mobile phone B stores fingerprint library information corresponding to a network that is discovered through scanning. For example, the fingerprint library information includes an SSID and a BSSID. Optionally, the mobile phone B clears stored fingerprint library information every 30s.

For example, after the mobile phone B receives the network configuration information sent by the mobile phone A, the mobile phone B may detect whether latest fingerprint library information that is currently stored is obtained within a specified time period. For example, if the mobile phone B detects that the latest fingerprint library information that is currently stored is obtained within 5s or 10s, the mobile phone B determines that the scanning phase can be skipped, and may directly enter the network selection phase. To be specific, the mobile phone B may be connected to a corresponding router based on the obtained network configuration information. The router in FIG. 3 is used as an example. It is assumed that the latest fingerprint library information stored in the mobile phone B includes fingerprint library information of a network (that is, the Huaweil network) corresponding to the router in FIG. 3 and fingerprint library information of networks corresponding to other routers, for example, the Huawei2 network and the Huawei3 network. Optionally, based on network configuration information of the Huaweil network and a network selection condition, the mobile phone B may choose to be connected to the Huaweil network in the network selection phase. Optionally, the network selection condition includes but is not limited to: the mobile phone B has been connected to the network before, the mobile phone B stores the network configuration information of the network, a communication quality parameter of the network is greater than or equal to the threshold, or the like. In other words, in the network selection phase, the mobile phone B detects that the network configuration information of the Huaweil network is stored, and determines that the Huawei1 network meets the network selection condition. The mobile phone B and the router perform subsequent phases such as authentication, association, and a 4-way handshake, to be connected to the router, namely, the Huawei1 network. For a connection procedure between the mobile phone B and the router, refer to the connection procedure that uses the WLAN protocol and that is shown in FIG. 8. Details are not described herein.

Optionally, in this embodiment of this application, as described above, the network configuration information may further include an operating channel of the Wi-Fi network. For example, if the mobile phone B does not detect valid fingerprint library information, for example, latest fingerprint library information that is stored is obtained 10s ago, the mobile phone B determines that the scanning phase is required. For example, in this embodiment of this application, the mobile phone B may perform scanning, based on an operating channel in the network configuration information, only on the operating channel indicated in the network configuration information in the scanning phase. For example, if a channel that is of the Huaweil network and that is sent by the mobile phone A to the mobile phone B is a channel 10, the mobile phone B optionally sends a probe request packet only on the channel 10 in the scanning phase, to shorten duration of the scanning phase. For a subsequent procedure, refer to the connection procedure that uses the WLAN protocol and that is shown in FIG. 8. Details are not described herein. Optionally, if the network configuration information sent by the mobile phone A to the mobile phone B includes network configuration information corresponding to a plurality of networks, and the network configuration information includes a plurality of channels, the mobile phone B may correspondingly perform scanning, in the scanning phase, on the plurality of channels indicated by the mobile phone A.

It should be noted that, in this embodiment of this application, the mobile phone B stores the received network configuration information in specified space (or a specified file) in a memory, and it is set that data in the specified space cannot be deleted after power-off.

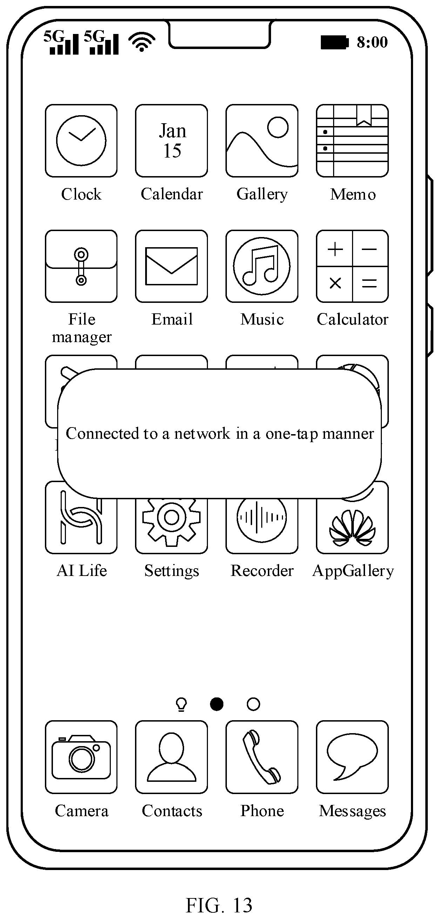

FIG. 13 is an example schematic diagram of a user interface. Refer to FIG. 13. For example, after the mobile phone B is connected to the router, the mobile phone B may display a prompt box on a current interface, where the prompt box includes prompt information "Connected to a network in a one-tap manner". Optionally, if the connection between the mobile phone A and the mobile phone B is established by using the proximity discovery function, the prompt box on the mobile phone B may include prompt information "Connected to a network through proximity discovery". This is not limited in this application.

Optionally, as described above, the mobile phone A may send, to the mobile phone B, network configuration information of a Wi-Fi network to which the mobile phone A is not connected currently. The mobile phone B may store the network configuration information, and is automatically connected to the Wi-Fi network when the Wi-Fi network corresponding to the network configuration information is subsequently discovered through scanning. For example, the mobile phone A is connected to a Huaweil network of a router in an office A. In addition, the mobile phone A stores a Huawei2 network of a router in an office B. It should be noted that the mobile phone A and the mobile phone B, when in the office A, cannot discover the Huawei2 network in the office B through scanning. In this embodiment of this application, the mobile phone A and the mobile phone B are in the office A. In addition, the mobile phone A establishes a connection to the mobile phone B in the one-tap manner, and sends, to the mobile phone B in response to a user operation through the connection to the mobile phone B, network configuration information of the currently connected Huaweil network and network configuration information that is of the Huawei2 network and that has been stored. The mobile phone B receives and stores the network configuration information of the Huaweil network and the network configuration information of the Huawei2 network. The mobile phone B may be automatically connected to the Huaweil network based on the received network configuration information. For specific details, refer to the foregoing description. Details are not described herein. A user holds the mobile phone B to leave the office A. After the mobile phone B is disconnected from the Huawei1 network, the user holds the mobile phone B to enter the office B. The mobile phone B may discover the Huawei2 network in a scanning phase. In a network selection phase, if the mobile phone B detects that the network configuration information of the Huawei2 network is stored, the mobile phone B may be automatically connected to the Huawei2 network. To be specific, even if the mobile phone B has never been connected to the Huawei2 network, the mobile phone B may be automatically connected to the Huawei2 network based on the network configuration information obtained from the mobile phone A. Optionally, the mobile phone B may also record an aging time period (for example, 10 minutes). In an example, the aging time period may refer to a time limit for automatically connecting to a corresponding network based on network configuration information. It should be noted that, in this embodiment of this application, an aging time period is set only for the network configuration information received by the mobile phone B from the mobile phone A, and no aging time period needs to be set for network configuration information obtained by the mobile phone B in another manner, for example, in a manner such as user input. For example, within 10 minutes after the mobile phone B receives the network configuration information of the Huawei1 network and the Huawei2 network, the mobile phone B moves to the office B and discovers the Huawei2 network through scanning. In the network selection phase, the mobile phone B detects that the mobile phone B has never been connected to the Huawei2 network but stores the network configuration information of the Huawei2 network, and that the network configuration information is stored for less than 10 minutes (in other words, the aging time period is 10 minutes). In this case, the mobile phone B may be connected to the Huawei2 network based on the stored network configuration information of the Huawei2 network. For example, 10 minutes after the mobile phone B receives the network configuration information of the Huaweil network and the Huawei2 network, the mobile phone B moves to the office B. The mobile phone B detects that the aging time period (10 minutes) for the network configuration information has been exceeded. In this case, the mobile phone B is not automatically connected to the Huawei2 network. Optionally, the user may tap the Huawei2 network in available Wi-Fi networks displayed on a WLAN setting interface of the mobile phone B. In response to the received user operation, the mobile phone B is connected to the Huawei2 network based on the stored network configuration information of the Huawei2 network. In this case, the user does not need to enter a password of the Huawei2 network.

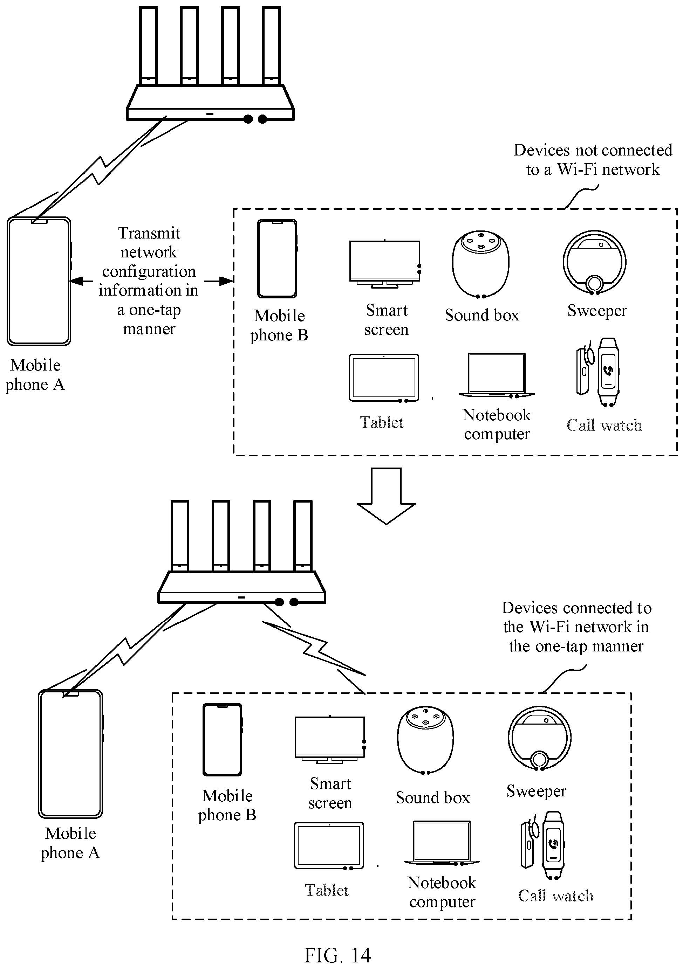

For example, FIG. 14 is a schematic diagram of an application scenario according to an embodiment of this application. Refer to FIG. 14. For example, a home of a user includes but is not limited to electronic devices shown in FIG. 14. A mobile phone A has been connected to a router, and other devices include electronic devices that are not connected to the router, such as a mobile phone B, a sound box, a call watch, a sweeper, a notebook computer, and a tablet. For example, the mobile phone A may tap each of the other electronic devices in a one-tap manner, to separately establish a connection and transmit network configuration information of the router. Each of the other electronic devices may be automatically connected to a Wi-Fi network of the router based on the received network configuration information. Optionally, in this embodiment of this application, for an electronic device that does not have a display interface, such as the sound box or a table lamp, after being powered on, the device may periodically send a scanning packet (such as a publish packet) or continuously perform listening to detect whether the scanning packet sent by the mobile phone A is received. For a manner used by the mobile phone A, refer to the foregoing descriptions. Details are not described herein.

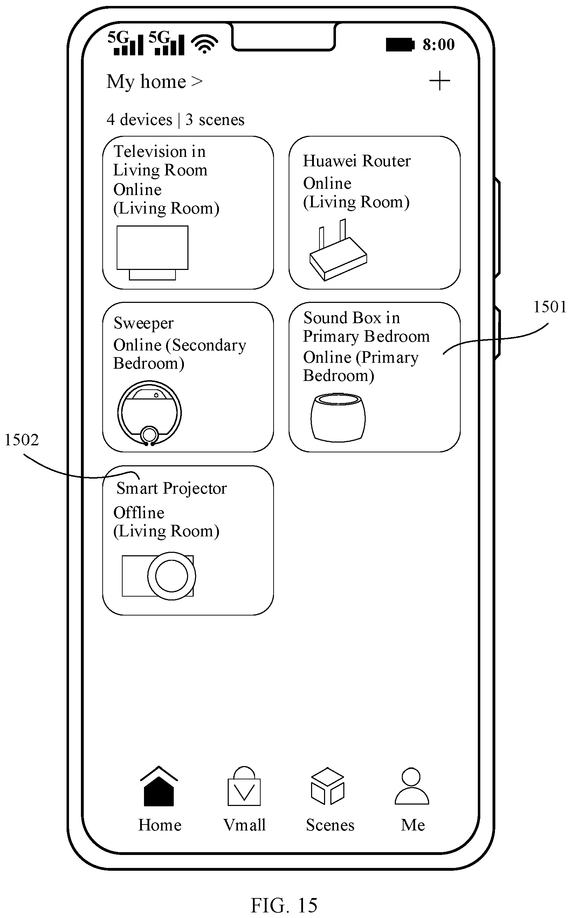

The sound box is used as an example. After the mobile phone A successfully configures a network for the sound box in the one-tap manner, the mobile phone A may determine that the sound box is a smart household device by identifying a device type and/or a device ID of the sound box (the device type and/or the device ID are/is obtained in a connection establishment procedure; and for example, a follow-up packet sent by the sound box carries the ID and the device type of the sound box). Then, the mobile phone A may add, an AI Life application, an icon and related information of the sound box device. For example, FIG. 15 is an example schematic diagram of an application interface of the AI Life application of the mobile phone A. Refer to FIG. 15. For example, after the mobile phone A successfully configures a network for each of the other electronic devices in FIG. 14 in the one-tap manner, the mobile phone A may identify, based on information such as a device type and/or an ID of the electronic device, smart household devices such as the sound box, a smart screen, and the sweeper in FIG. 14. Still refer to FIG. 15. An AI Life interface of the mobile phone A may display options (the options may alternatively be referred to as option boxes) corresponding to the sound box, the smart screen, the sweeper, and the router. For example, the option box may include an identifier (such as a name, a room in which a smart household device is located, and an icon) of the smart household device, and may further indicate an offline/online state.

For example, in this embodiment of this application, the online state optionally means that the smart household device is powered on and connected to the router, and/or that the mobile phone is powered on and connected to the mobile phone A. To be specific, even if the mobile phone A is disconnected from the smart household device, but the smart household device is still connected to the router through Wi-Fi, it can be considered that the smart household device is online, and the mobile phone A can control the smart household device. For example, the user may tap a sound box option 1501 to enter a sound box control interface, and control the sound box, for example, power off the sound box or play music.

For example, in this embodiment of this application, the offline state optionally means that the smart household device is powered off, or that the smart household device is not connected to the mobile phone A and the router. It may also be understood as that the mobile phone cannot control the smart household device.

It should be noted that, after discovering (or finding) a smart household device through scanning, the mobile phone may add an option box of the smart household device to the AI Life interface, such as an option box 1502 in FIG. 15. For example, after the mobile phone taps a projector in the one-tap manner, the mobile phone discovers the projector through scanning, and displays the option box 1502 of the projector on the AI Life interface, where the option box 1502 indicates that the projector is offline. After a connection between the projector and the mobile phone is established, the option box 1502 indicates that the projector is online. For example, the mobile phone successfully configures a network for the projector, to be specific, the mobile phone sends the network configuration information to the projector, and the projector is connected to the router based on the network configuration information. Subsequently, even if the mobile phone is disconnected from the projector, the projector displayed on the AI Life interface is still online. Optionally, after the projector is powered off, the option box 1502 indicates that the projector is offline.

It should be further noted that the smart household device in this embodiment of this application may alternatively be referred to as an internet of things (Internet of Things, IoT) device. It should be noted that the AI Life interface of the mobile phone may further display an option corresponding to an offline smart household device.

Optionally, in this embodiment of this application, after establishing a connection to an electronic device (such as the mobile phone B) and successfully sending the network configuration information (for example, sending the network configuration information twice, or receiving a response message fed back by the mobile phone B), the mobile phone A may be disconnected from the mobile phone B. For example, in the scenario shown in FIG. 14, after the mobile phone A establishes a connection to the mobile phone B and successfully transmits the network configuration information, the mobile phone A is disconnected from the mobile phone B. The user taps the mobile phone A against the smart screen in the one-tap manner. After the mobile phone A establishes a connection to the smart screen and successfully transmits the network configuration information, the mobile phone A is disconnected from the smart screen. It should be noted that, a time period from when the mobile phone A establishes a connection to another device to when the mobile phone A is disconnected from the another device is usually shorter than a time period in which the user holds the mobile phone A to switch between different devices in the one-tap manner.

Optionally, in this embodiment of this application, after establishing a connection to the sound box and successfully transmitting the network configuration information, the mobile phone A maintains the connection to the sound box, to perform another operation. For example, the user may control the sound box via the mobile phone A. In this example, when maintaining the connection to the sound box, the mobile phone A may continue to establish a connection to another electronic device and transmit the network configuration information.

In a possible implementation, it is assumed that the mobile phone A maintains a connection to a smart household device (such as the sound box), and the smart household device is connected to the router. In this case, a user A sends a music playing instruction to the sound box via the AI Life application. For example, the user A may tap the sound box option 1501 on the AI Life interface of the mobile phone A to enter the sound box control interface, and perform selection on the sound box control interface to enable the sound box to play music. In an example, in response to a received user operation, the mobile phone A may send a music playing instruction to the sound box through the connection to the sound box. In response to the received instruction, the sound box may play music. In another example, the mobile phone A may send a music playing instruction to a Huawei cloud through a Wi-Fi network or a cellular network, where the instruction may carry information such as an ID, a device type, and a user account of the sound box. The Huawei cloud may send a music playing instruction to a router in a home of the user A based on the received instruction. The router forwards the instruction to the sound box, and the sound box may play music in response to the received instruction. Optionally, the sound box and the mobile phone A share a same user account.

In another possible implementation, it is assumed that the mobile phone A is disconnected from a smart household device (such as the sound box). For example, the user A holds the mobile phone A and leaves home. However, the user A wants to remotely control the sound box to play music. For example, when the sound box is powered on and connected to the router, an option box of the sound box on the AI Life interface of the mobile phone A shows that the sound box is online. The user A may control the mobile phone A to send a music playing instruction to the sound box. The mobile phone A may send the music playing instruction to the sound box via the Huawei cloud and the router.

It should be noted that the AI Life application in this embodiment of this application may alternatively be referred to as a household management application or the like. The application may be used to control and manage a smart household device.

It may be understood that, to implement the foregoing functions, the electronic device includes corresponding hardware and/or software modules for performing the functions. In combination with example algorithm steps described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

An embodiment further provides a computer storage medium. The computer storage medium stores computer instructions. When the computer instructions are run on an electronic device, the electronic device is enabled to perform the related method steps, to implement the access method in the foregoing embodiments.

An embodiment further provides a computer program product. When the computer program product runs on a computer, the computer is enabled to perform the related steps, to implement the access method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions, and when the apparatus runs, the processor may execute the computer-executable instructions stored in the memory, so that the chip performs the access method in the foregoing method embodiments.

The electronic device, the computer storage medium, the computer program product, or the chip provided in embodiments is configured to perform the corresponding method provided above. Therefore, for beneficial effects that can be achieved, refer to the beneficial effects of the corresponding method provided above. Details are not described herein.

Based on the foregoing descriptions of the implementations, a person skilled in the art may understand that for the purpose of convenient and brief description, division into the foregoing functional modules is merely used as an example for illustration. During actual application, the foregoing functions can be allocated to different functional modules for implementation based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

Any content of embodiments of this application and any content of a same embodiment may be freely combined. Any combination of the foregoing content shall fall within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

Embodiments of this application are described above with reference to the accompanying drawings. However, this application is not limited to the foregoing specific implementations. The foregoing specific implementations are merely illustrative rather than restrictive. Under the teachings of this application, a person of ordinary skill in the art can make many forms without departing from the principle of this application and the protection scope of claims, which shall fall within the protection scope of this application.

## Claims

1. An access system, comprising a first electronic device (A), a second electronic device (B), and an access point device, wherein the first electronic device (A) exchanges data with the access point device through a Wi-Fi connection and stores connection information of the access point device, and the second electronic device (B) is not connected to the access point device, wherein
the first electronic device (A) is configured to:
display a first interface of an application in response to a received first operation;
detect a first trigger event when the first electronic device displays the first interface, wherein the first trigger event is that a effective tap event occurs on the first electronic device and an acceleration of the first electronic device in a preset time period before a moment at which the effective tap event occurs is greater than or equal to a first threshold, wherein the effective tap event is detected when the first electronic device and the second electronic device tap each other and wherein the effective tap event is two or more tap events occurring within a specific time period;
establish a first connection to the second electronic device as a response to the first trigger if the first electronic device (A) has been connected to the Wi-Fi connection and the display interface of the first terminal device (A) displays the first interface of the application; and
send the connection information to the second electronic device through the first connection; and
the second electronic device (B) is configured to:
receive the connection information; and
establish a Wi-Fi connection to the access point device based on the connection information.

2. The system according to claim 1, wherein the first electronic device (A) is configured to:
display a first window, wherein the first window comprises a first option, and the first option indicates to send the connection information to the second electronic device (B);
receive a second operation performed by a user on the first option; and
send the connection information to the second electronic device (B) through the first connection in response to the second operation.

3. The system according to claim 1, wherein the first interface comprises a first option box, the first option box comprises identification information of a third electronic device and first prompt information, and the first prompt information indicates the third electronic device to exchange data with the access point device through a Wi-Fi connection; and
the first electronic device (A) is further configured to:
display a second option box on the first interface, wherein the second option box comprises identification information of the second electronic device (B) and second prompt information, and the second prompt information indicates the second electronic device to exchange data with the access point device through the Wi-Fi connection.

4. The system according to claim 3, wherein the second electronic device (B) is an internet of things IoT device.

5. The system according to claim 1, wherein
the first electronic device (A) is configured to:
when detecting that the first electronic device (A) displays the first interface and the first electronic device (A) exchanges data with the access point device through the Wi-Fi connection, send a first connection request message to the second electronic device (B), wherein the first connection request message indicates to establish a connection to the second electronic device (B); and
the second electronic device (B) is configured to:
display a second interface in response to a received second operation;
detect the first trigger event when the second electronic device (B) displays the second interface; and
establish the first connection to the first electronic device (A) in response to the received first connection request message.

6. The system according to claim 1, wherein
the second electronic device (B) is configured to:
display a second interface in response to a received second operation;
detect the first trigger event when the second electronic device displays the second interface; and
when detecting that the second electronic device displays the second interface and the second electronic device is not connected to the access point device, send a second connection request message to the first electronic device, wherein the second connection request message indicates to establish a connection to the first electronic device; and
the first electronic device (A) is configured to:
establish the first connection to the second electronic device in response to the received second connection request message.

7. The system according to claim 5 or 6, wherein the second interface is at least one of the following:
an application interface of a first application, a screen-on unlock screen, and a screen-on lock screen.

8. The system according to claim 7, wherein the first interface comprises at least one of the following:
an application interface of a second application, a screen-on unlock screen, and a screen-on lock screen, wherein
the first application is the same as or different from the second application.

9. An access method, applied to a first electronic device (A), a second electronic device (B), and an access point device, wherein the first electronic device (A) exchanges data with the access point device through a Wi-Fi connection and stores connection information of the access point device, and the second electronic device (B) is not connected to the access point device, and the method comprises:
displaying, by the first electronic device (A), a first interface of an application in response to a received first operation;
detecting, by the first electronic device (A), a first trigger event when displaying the first interface, wherein the first trigger event is that a effective tap event occurs on the first electronic device and an acceleration of the first electronic device in a preset time period before a moment at which the effective tap event occurs is greater than or equal to a first threshold, wherein the effective tap event is detected when the first electronic device and the second electronic device tap each other and wherein the effective tap event is two or more tap events occurring within a specific time period;
establishing, by the first electronic device (A) and the second electronic device (B), a first connection, as a response to the first trigger if the first electronic device (A) has been connected to the Wi-Fi connection and the display interface of the first terminal device (A) displays the first interface of the application;
sending, by the first electronic device (A), the connection information to the second electronic device (B) through the first connection;
receiving, by the second electronic device (B), the connection information; and
establishing, by the second electronic device (B), a Wi-Fi connection to the access point device based on the connection information.

10. The method according to claim 9, wherein the sending, by the first electronic device (A), the connection information to the second electronic device (B) through the first connection comprises:
displaying, by the first electronic device (A), a first window, wherein the first window comprises a first option, and the first option indicates to send the connection information to the second electronic device (B);
receiving, by the first electronic device (A), a second operation performed by a user on the first option; and
sending, by the first electronic device (A), the connection information to the second electronic device (B) through the first connection in response to the second operation.

11. The method according to claim 9, wherein the first interface comprises a first option box, the first option box comprises identification information of a third electronic device and first prompt information, and the first prompt information indicates the third electronic device to exchange data with the access point device through a Wi-Fi connection; and the method further comprises:
displaying, by the first electronic device, a second option box on the first interface, wherein the second option box comprises identification information of the second electronic device and second prompt information, and the second prompt information indicates the second electronic device to exchange data with the access device through the Wi-Fi connection.

12. The method according to claim 11, wherein the second electronic device is an internet of things IoT device.

## Patentansprüche

1. Zugriffssystem, umfassend eine erste elektronische Vorrichtung (A), eine zweite elektronische Vorrichtung (B) und eine Zugriffspunktvorrichtung, wobei die erste elektronische Vorrichtung (A) über eine Wi-Fi-Verbindung Daten mit der Zugriffspunktvorrichtung austauscht und Verbindungsinformationen der Zugriffspunktvorrichtung speichert und die zweite elektronische Vorrichtung (B) nicht mit der Zugriffspunktvorrichtung verbunden ist, wobei
die erste elektronische Vorrichtung (A) dazu konfiguriert ist:
eine erste Schnittstelle einer Anwendung als Reaktion auf eine empfangene erste Operation anzuzeigen;
ein erstes Auslöseereignis zu detektieren, wenn die erste elektronische Vorrichtung die erste Schnittstelle anzeigt, wobei das erste Auslöseereignis darin besteht, dass auf der ersten elektronischen Vorrichtung ein effektives Tippereignis auftritt und eine Beschleunigung der ersten elektronischen Vorrichtung in einem voreingestellten Zeitraum vor einem Moment, zu welchem das effektive Tippereignis auftritt, größer oder gleich einem ersten Schwellenwert ist, wobei das effektive Tippereignis detektiert wird, wenn sich die erste elektronische Vorrichtung und die zweite elektronische Vorrichtung gegenseitig antippen, und wobei das effektive Tippereignis aus zwei oder mehr Tippereignissen besteht, die innerhalb eines spezifischen Zeitraums auftreten;
eine erste Verbindung mit der zweiten elektronischen Vorrichtung als eine Reaktion auf den ersten Auslöser herzustellen, wenn die erste elektronische Vorrichtung (A) mit der Wi-Fi-Verbindung verbunden wurde und die Anzeigeschnittstelle der ersten Endgerätevorrichtung (A) die erste Schnittstelle der Anwendung anzeigt; und
die Verbindungsinformationen über die erste Verbindung an die zweite elektronische Vorrichtung zu senden; und
die zweite elektronische Vorrichtung (B) dazu konfiguriert ist: die Verbindungsinformationen zu empfangen; und
basierend auf den Verbindungsinformationen eine Wi-Fi-Verbindung zu der Zugriffspunktvorrichtung herzustellen.

2. System nach Anspruch 1, wobei die erste elektronische Vorrichtung (A) dazu konfiguriert ist:
ein erstes Fenster anzuzeigen, wobei das erste Fenster eine erste Option umfasst, und die erste Option angibt, die Verbindungsinformationen an die zweite elektronische Vorrichtung (B) zu senden;
eine zweite Operation, die durch einen Benutzer an der ersten Option durchgeführt wird, zu empfangen; und
die Verbindungsinformationen über die erste Verbindung als Reaktion auf die zweite Operation an die zweite elektronische Vorrichtung (B) zu senden.

3. System nach Anspruch 1, wobei die erste Schnittstelle ein erstes Optionsfeld umfasst, das erste Optionsfeld Identifikationsinformationen einer dritten elektronischen Vorrichtung und erste Eingabeaufforderungsinformationen umfasst und die ersten Eingabeaufforderungsinformationen die dritte elektronische Vorrichtung angeben, um über eine Wi-Fi-Verbindung Daten mit der Zugriffspunktvorrichtung auszutauschen; und
die erste elektronische Vorrichtung (A) ferner dazu konfiguriert ist:
ein zweites Optionsfeld an der ersten Schnittstelle anzuzeigen, wobei das zweite Optionsfeld Identifikationsinformationen der zweiten elektronischen Vorrichtung (B) und zweite Eingabeaufforderungsinformationen umfasst und die zweiten Eingabeaufforderungsinformationen die zweite elektronische Vorrichtung angeben, um über die Wi-Fi-Verbindung Daten mit der Zugriffspunktvorrichtung auszutauschen.

4. System nach Anspruch 3, wobei die zweite elektronische Vorrichtung (B) eine Vorrichtung für das Internet der Dinge, IoT-Vorrichtung, ist.

5. System nach Anspruch 1, wobei
die erste elektronische Vorrichtung (A) dazu konfiguriert ist:
beim Detektieren, dass die erste elektronische Vorrichtung (A) die erste Schnittstelle anzeigt und die erste elektronische Vorrichtung (A) über die Wi-Fi-Verbindung Daten mit der Zugriffspunktvorrichtung austauscht, eine erste Verbindungsanforderungsnachricht an die zweite elektronische Vorrichtung (B) zu senden, wobei die erste Verbindungsanforderungsnachricht angibt, eine Verbindung zu der zweiten elektronischen Vorrichtung (B) herzustellen; und
die zweite elektronische Vorrichtung (B) dazu konfiguriert ist:
eine zweite Schnittstelle als Reaktion auf eine empfangene zweite Operation anzuzeigen;
das erste Auslöseereignis zu detektieren, wenn die zweite elektronische Vorrichtung (B) die zweite Schnittstelle anzeigt; und
die erste Verbindung zu der ersten elektronischen Vorrichtung (A) als Reaktion auf die empfangene erste Verbindungsanforderungsnachricht herzustellen.

6. System nach Anspruch 1, wobei
die zweite elektronische Vorrichtung (B) dazu konfiguriert ist:
eine zweite Schnittstelle als Reaktion auf eine empfangene zweite Operation anzuzeigen;
das erste Auslöseereignis zu detektieren, wenn die zweite elektronische Vorrichtung die zweite Schnittstelle anzeigt; und
beim Detektieren, dass die zweite elektronische Vorrichtung die zweite Schnittstelle anzeigt und die zweite elektronische Vorrichtung nicht mit der Zugriffspunktvorrichtung verbunden ist, eine zweite Verbindungsanforderungsnachricht an die erste elektronische Vorrichtung zu senden, wobei die zweite Verbindungsanforderungsnachricht angibt, eine Verbindung zu der ersten elektronischen Vorrichtung herzustellen; und
die erste elektronische Vorrichtung (A) dazu konfiguriert ist:
die erste Verbindung zu der zweiten elektronischen Vorrichtung als Reaktion auf die empfangene zweite Verbindungsanforderungsnachricht herzustellen.

7. System nach Anspruch 5 oder 6, wobei die zweite Schnittstelle mindestens eines der folgenden ist:
eine Anwendungsschnittstelle einer ersten Anwendung, ein Bildschirm zum Entsperren bei eingeschaltetem Bildschirm und ein Sperrbildschirm bei eingeschaltetem Bildschirm.

8. System nach Anspruch 7, wobei die erste Schnittstelle mindestens eines der folgenden umfasst:
eine Anwendungsschnittstelle einer zweiten Anwendung, ein Bildschirm zum Entsperren bei eingeschaltetem Bildschirm und ein Sperrbildschirm bei eingeschaltetem Bildschirm, wobei die erste Anwendung dieselbe wie die zweite Anwendung ist oder sich davon unterscheidet.

9. Zugriffsverfahren, das auf eine erste elektronische Vorrichtung (A), eine zweite elektronische Vorrichtung (B) und eine Zugriffspunktvorrichtung angewendet wird, wobei die erste elektronische Vorrichtung (A) über eine Wi-Fi-Verbindung Daten mit der Zugriffspunktvorrichtung austauscht und Verbindungsinformationen der Zugriffspunktvorrichtung speichert und die zweite elektronische Vorrichtung (B) nicht mit der Zugriffspunktvorrichtung verbunden ist, und wobei das Verfahren Folgendes umfasst:
Anzeigen einer ersten Schnittstelle einer Anwendung durch die erste elektronische Vorrichtung (A) als Reaktion auf eine empfangene erste Operation;
Detektieren eines ersten Auslöseereignisses beim Anzeigen der ersten Schnittstelle durch die erste elektronische Vorrichtung (A), wobei das erste Auslöseereignis darin besteht, dass auf der ersten elektronischen Vorrichtung ein effektives Tippereignis auftritt und eine Beschleunigung der ersten elektronischen Vorrichtung in einem voreingestellten Zeitraum vor einem Moment, zu welchem das effektive Tippereignis auftritt, größer oder gleich einem ersten Schwellenwert ist, wobei das effektive Tippereignis detektiert wird, wenn sich die erste elektronische Vorrichtung und die zweite elektronische Vorrichtung gegenseitig antippen, und wobei das effektive Tippereignis aus zwei oder mehr Tippereignissen besteht, die innerhalb eines spezifischen Zeitraums auftreten;
Herstellen einer ersten Verbindung durch die erste elektronische Vorrichtung (A) und die zweite elektronische Vorrichtung (B) als eine Reaktion auf den ersten Auslöser, wenn die erste elektronische Vorrichtung (A) mit der Wi-Fi-Verbindung verbunden wurde und die Anzeigeschnittstelle der ersten Endgerätevorrichtung (A) die erste Schnittstelle der Anwendung anzeigt;
Senden der Verbindungsinformationen durch die erste elektronische Vorrichtung (A) über die erste Verbindung an die zweite elektronische Vorrichtung (B);
Empfangen der Verbindungsinformationen durch die zweite elektronische Vorrichtung (B); und
Herstellen einer Wi-Fi-Verbindung zu der Zugriffspunktvorrichtung durch die zweite elektronische Vorrichtung (B) basierend auf den Verbindungsinformationen.

10. Verfahren nach Anspruch 9, wobei das Senden der Verbindungsinformationen durch die erste elektronische Vorrichtung (A) über die erste Verbindung an die zweite elektronische Vorrichtung (B) Folgendes umfasst:
Anzeigen eines ersten Fensters durch die erste elektronische Vorrichtung (A), wobei das erste Fenster eine erste Option umfasst, und die erste Option angibt, die Verbindungsinformationen an die zweite elektronische Vorrichtung (B) zu senden;
Empfangen einer zweiten Operation, die durch einen Benutzer an der ersten Option durchgeführt wird, durch die erste elektronische Vorrichtung (A); und
Senden der Verbindungsinformationen durch die erste elektronische Vorrichtung (A) über die erste Verbindung als Reaktion auf die zweite Operation an die zweite elektronische Vorrichtung (B).

11. Verfahren nach Anspruch 9, wobei die erste Schnittstelle ein erstes Optionsfeld umfasst, das erste Optionsfeld Identifikationsinformationen einer dritten elektronischen Vorrichtung und erste Eingabeaufforderungsinformationen umfasst und die ersten Eingabeaufforderungsinformationen die dritte elektronische Vorrichtung angeben, um über eine Wi-Fi-Verbindung Daten mit der Zugriffspunktvorrichtung auszutauschen; und wobei das Verfahren ferner Folgendes umfasst:
Anzeigen eines zweiten Optionsfelds an der ersten Schnittstelle durch die erste elektronische Vorrichtung, wobei das zweite Optionsfeld Identifikationsinformationen der zweiten elektronischen Vorrichtung und zweite Eingabeaufforderungsinformationen umfasst und die zweiten Eingabeaufforderungsinformationen die zweite elektronische Vorrichtung angeben, um über die Wi-Fi-Verbindung Daten mit der Zugriffsvorrichtung auszutauschen.

12. Verfahren nach Anspruch 11, wobei die zweite elektronische Vorrichtung eine Vorrichtung für das Internet der Dinge, IoT-Vorrichtung, ist.

## Revendications

1. Système d'accès, comprenant un premier dispositif électronique (A), un deuxième dispositif électronique (B) et un dispositif de point d'accès, dans lequel le premier dispositif électronique (A) échange des données avec le dispositif de point d'accès par le biais d'une connexion Wi-Fi et stocke des informations de connexion du dispositif de point d'accès, et le deuxième dispositif électronique (B) n'est pas connecté au dispositif de point d'accès, dans lequel
le premier dispositif électronique (A) est configuré pour :
afficher une première interface d'une application en réponse à une première opération reçue ;
détecter un premier événement déclencheur lorsque le premier dispositif électronique affiche la première interface, dans lequel le premier événement déclencheur est qu'un événement de tapotement effectif se produit sur le premier dispositif électronique et qu'une accélération du premier dispositif électronique dans une période de temps prédéfinie avant un moment auquel l'événement de tapotement effectif se produit est supérieure ou égale à un premier seuil, dans lequel l'événement de tapotement effectif est détecté lorsque le premier dispositif électronique et le deuxième dispositif électronique se tapotent l'un l'autre et l'événement de tapotement effectif est deux événements de tapotement ou plus se produisant dans une période de temps spécifique ;
établir une première connexion au deuxième dispositif électronique en réponse au premier déclencheur si le premier dispositif électronique (A) a été connecté à la connexion Wi-Fi et l'interface d'affichage du premier dispositif terminal (A) affiche la première interface de l'application ; et
envoyer les informations de connexion au deuxième dispositif électronique par le biais de la première connexion ; et
le deuxième dispositif électronique (B) est configuré pour :
recevoir les informations de connexion ; et
établir une connexion Wi-Fi au dispositif de point d'accès sur la base des informations de connexion.

2. Système selon la revendication 1, dans lequel le premier dispositif électronique (A) est configuré pour :
afficher une première fenêtre, dans lequel la première fenêtre comprend une première option, et la première option indique d'envoyer les informations de connexion au deuxième dispositif électronique (B) ;
recevoir une seconde opération réalisée par un utilisateur sur la première option ; et
envoyer les informations de connexion au deuxième dispositif électronique (B) par le biais de la première connexion en réponse à la seconde opération.

3. Système selon la revendication 1, dans lequel la première interface comprend une première boîte d'options, la première boîte d'options comprend des informations d'identification d'un troisième dispositif électronique et des premières informations d'invite, et les premières informations d'invite indiquent au troisième dispositif électronique d'échanger des données avec le dispositif de point d'accès par le biais d'une connexion Wi-Fi ; et
le premier dispositif électronique (A) est également configuré pour :
afficher une seconde boîte d'options sur la première interface, dans lequel la seconde boîte d'options comprend des informations d'identification du deuxième dispositif électronique (B) et des secondes informations d'invite, et les secondes informations d'invite indiquent au deuxième dispositif électronique d'échanger des données avec le dispositif de point d'accès par le biais de la connexion Wi-Fi.

4. Système selon la revendication 3, dans lequel le deuxième dispositif électronique (B) est un dispositif de l'Internet des objets IoT.

5. Système selon la revendication 1, dans lequel
le premier dispositif électronique (A) est configuré pour :
lors de la détection du fait que le premier dispositif électronique (A) affiche la première interface et que le premier dispositif électronique (A) échange des données avec le dispositif de point d'accès par le biais de la connexion Wi-Fi, envoyer un premier message de demande de connexion au deuxième dispositif électronique (B), dans lequel le premier message de demande de connexion indique d'établir une connexion au deuxième dispositif électronique (B) ; et
le deuxième dispositif électronique (B) est configuré pour :
afficher une seconde interface en réponse à une seconde opération reçue ;
détecter le premier événement déclencheur lorsque le deuxième dispositif électronique (B) affiche la seconde interface ; et
établir la première connexion au premier dispositif électronique (A) en réponse au premier message de demande de connexion reçu.

6. Système selon la revendication 1, dans lequel le deuxième dispositif électronique (B) est configuré pour :
afficher une seconde interface en réponse à une seconde opération reçue ;
détecter le premier événement déclencheur lorsque le deuxième dispositif électronique affiche la seconde interface ; et
lors de la détection du fait que le deuxième dispositif électronique affiche la seconde interface et que le deuxième dispositif électronique n'est pas connecté au dispositif de point d'accès, envoyer un second message de demande de connexion au premier dispositif électronique, dans lequel le second message de demande de connexion indique d'établir une connexion au premier dispositif électronique ; et
le premier dispositif électronique (A) est configuré pour :
établir la première connexion au deuxième dispositif électronique en réponse au second message de demande de connexion reçu.

7. Système selon la revendication 5 ou 6, dans lequel la seconde interface est au moins l'un :
d'une interface d'application d'une première application, d'un écran de déverrouillage d'écran et d'un écran de verrouillage d'écran.

8. Système selon la revendication 7, dans lequel la première interface comprend au moins l'un :
d'une interface d'application d'une seconde application, d'un écran de déverrouillage d'écran et d'un écran de verrouillage d'écran, dans lequel
la première application est identique ou différente de la seconde application.

9. Procédé d'accès, appliqué à un premier dispositif électronique (A), un deuxième dispositif électronique (B) et un dispositif de point d'accès, dans lequel le premier dispositif électronique (A) échange des données avec le dispositif de point d'accès par le biais d'une connexion Wi-Fi et stocke des informations de connexion du dispositif de point d'accès, et le deuxième dispositif électronique (B) n'est pas connecté au dispositif de point d'accès, et le procédé comprend :
l'affichage, par le premier dispositif électronique (A), d'une première interface d'une application en réponse à une première opération reçue ;
la détection, par le premier dispositif électronique (A), d'un premier événement déclencheur lorsque l'affichage de la première interface, dans lequel le premier événement déclencheur est qu'un événement de tapotement effectif se produit sur le premier dispositif électronique et qu'une accélération du premier dispositif électronique dans une période de temps prédéfinie avant un moment auquel l'événement de tapotement effectif se produit est supérieure ou égale à un premier seuil, dans lequel l'événement de tapotement effectif est détecté lorsque le premier dispositif électronique et le deuxième dispositif électronique se tapotent l'un l'autre et l'événement de tapotement effectif est deux ou plusieurs événements de tapotement se produisant dans une période de temps spécifique ;
l'établissement, par le premier dispositif électronique (A) et le deuxième dispositif électronique (B), d'une première connexion en réponse au premier déclencheur si le premier dispositif électronique (A) a été connecté à la connexion Wi-Fi et l'interface d'affichage du premier dispositif terminal (A) affiche la première interface de l'application ;
l'envoi, par le premier dispositif électronique (A), des informations de connexion au deuxième dispositif électronique (B) par le biais de la première connexion ;
la réception, par le deuxième dispositif électronique (B), des informations de connexion ; et
l'établissement, par le deuxième dispositif électronique (B), d'une connexion Wi-Fi au dispositif de point d'accès sur la base des informations de connexion.

10. Procédé selon la revendication 9, dans lequel l'envoi, par le premier dispositif électronique (A), des informations de connexion au deuxième dispositif électronique (B) par le biais de la première connexion comprend :
l'affichage, par le premier dispositif électronique (A), d'une première fenêtre, dans lequel la première fenêtre comprend une première option, et la première option indique d'envoyer les informations de connexion au deuxième dispositif électronique (B) ;
la réception, par le premier dispositif électronique (A), d'une seconde opération réalisée par un utilisateur sur la première option ; et
l'envoi, par le premier dispositif électronique (A), des informations de connexion au deuxième dispositif électronique (B) par le biais de la première connexion en réponse à la seconde opération.

11. Procédé selon la revendication 9, dans lequel la première interface comprend une première boîte d'options, la première boîte d'options comprend des informations d'identification d'un troisième dispositif électronique et des premières informations d'invite, et les premières informations d'invite indiquent au troisième dispositif électronique d'échanger des données avec le dispositif de point d'accès par le biais d'une connexion Wi-Fi ; et le procédé comprend également :
l'affichage, par le premier dispositif électronique, d'une seconde boîte d'options sur la première interface, dans lequel la seconde boîte d'options comprend des informations d'identification du deuxième dispositif électronique et des secondes informations d'invite, et les secondes informations d'invite indiquent au deuxième dispositif électronique d'échanger des données avec le dispositif de point d'accès par le biais de la connexion Wi-Fi.

12. Procédé selon la revendication 11, dans lequel le deuxième dispositif électronique est un dispositif de l'Internet des objets IoT.
